# EUROPÄISCHE PATENTSCHRIFT

(11) **EP 3 630 555 B1**
(45) Veröffentlichungstag und Bekanntmachung des Hinweises auf die Patenterteilung: **08.05.2024**
(21) Anmeldenummer: 18729616.5
(22) Anmeldetag: 29.05.2018
(51) Int. Cl.: B60R 25/00, E05B 19/00

(54) **BEHÄLTERVORRICHTUNG ZUR AUFBEWAHRUNG EINES ID-GEBERS, EINLAGE ZUR AUFBEWAHRUNG EINES ID-GEBERS SOWIE VERFAHREN ZUM BETÄTIGEN EINES ID-GEBERS**
CONTAINER DEVICE FOR ACCOMMODATING AN ID TRANSMITTER, INSERT FOR ACCOMMODATING AN ID TRANSMITTER, AND METHOD FOR ACTUATING AN ID TRANSMITTER
DISPOSITIF FORMANT CONTENANT SERVANT À STOCKER UN TRANSMETTEUR D'IDENTIFIANT, INSERT SERVANT À STOCKER UN TRANSMETTEUR D'IDENTIFIANT, AINSI QUE PROCÉDÉ SERVANT À ACTIONNER UN TRANSMETTEUR D'IDENTIFIANT

(30) Priorität: 31.05.2017 DE 102017112007
(43) Veröffentlichungstag der Anmeldung: 08.04.2020
(73) Patentinhaber: Liberkee GmbH, 42551 Velbert (DE)
(72) Erfinder: GENNERMANN, Sven, 42553 Velbert (DE); BAMBECK, Daniel, 45149 Essen (DE); SCHIEMANN, Stefan, 51067 Köln (DE); NEITZEL, Robin, 44799 Bochum (DE)
(74) Vertreter: Bals & Vogel Patentanwälte PartGmbB
(86) Internationale Anmeldenummer: PCT/EP2018/064083
(87) Internationale Veröffentlichungsnummer: WO 2018/219957

(56) Entgegenhaltungen:
- EP-A1- 1 808 336
- WO-A1-2017/168341
- DE-A1-102005 059 061
- DE-A1-102012 015 925

## Beschreibung

Die Erfindung betrifft eine Behältervorrichtung zur Aufbewahrung eines ID-Gebers in einem Fahrzeug gemäß dem Oberbegriff des Anspruchs 1, eine Einlage zur Aufbewahrung eines ID-Gebers in einer Kavität einer Behältervorrichtung gemäß dem Oberbegriff des Anspruchs 13, ein Behältersystem, sowie ein Verfahren zum Betätigen eines ID-Gebers nach dem unabhängigen Verfahrensanspruch.

Es ist bekannt, dass insbesondere in Großstädten das sogenannte Carsharing immer beliebter wird. Beim Carsharing werden Fahrzeuge durch einen Carsharing-Anbieter zur Verfügung gestellt, welche ein Benutzer ausleihen kann, um damit bspw. eine bestimmte Strecke zurückzulegen oder eine bestimmte Erledigung, wie Einkaufen, vorzunehmen. Anschließend stellt der Nutzer das Fahrzeug wieder ab, sodass dieses für den nächsten Benutzer zur Verfügung steht.

Dabei ist es zurzeit üblich, dass der Schlüssel zum Beispiel im Handschuhfach des Carsharing-Fahrzeugs angeordnet ist und ein Benutzer über sein Mobiltelefon einen Online-Code zum Zugang zum Fahrzeug erhält, um dieses öffnen zu können. Sobald er Zugang zum Fahrzeug erlangt hat, greift er ins Handschuhfach und bedient sich des darin befindlichen Schlüssels, in welchem er auch den Schlüssel nach Nutzung wieder hinterlegen soll. Dadurch ist gewährleistet, dass auch der nächste Nutzer den Schlüssel dort vorfindet. Es kann jedoch vorkommen, dass der Fahrzeugschlüssel bewusst oder unbewusst mitgenommen wird. Ferner ist der Schlüssel bspw. für einen Einbrecher zugänglich, sofern sich dieser unbefugten Zutritt zum Fahrzeug, zum Beispiel durch Einschlagen einer Scheibe, verschafft, so dass es für den Einbrecher ein Leichtes ist, auch die Wegfahrsperre mit dem im Handschuhfach befindlichen Schlüssel zu überwinden.

Problematisch ist ferner, dass Einzellösungen zum Zugang eines jeden Benutzers zur Wegfahrsperre, bspw. durch den Carsharing-Anbieter zur Verfügung gestellten Code, häufig größere Umrüstungen am Fahrzeug erfordern würden. Größere Umrüstungen können z.B. einen Einbau einer speziellen Schließanlage für den Carsharing-Betrieb sein. Üblicherweise handelt es sich bei Carsharing-Fahrzeugen jedoch häufig um Serienfahrzeuge, welche mit geringstmöglichem Aufwand in Carsharing-Fahrzeuge umgewandelt werden sollen, sodass möglichst geringe Kosten entstehen.

DE 10 2012 015 925 A1 offenbart ein System zur automatisierten Übergabe eines Funkschlüssels zwischen Sharing-Teilnehmern sowie ein entsprechendes Verfahren.

Ist es daher Aufgabe der vorliegenden Erfindung, die vorstehenden aus dem Stand der Technik bekannten Nachteile zumindest teilweise zu beheben. Insbesondere ist es eine Aufgabe der vorliegenden Erfindung, eine Betätigung eines ID-Gebers zu ermöglichen, vorzugsweise ohne dass eine manuelle Betätigung durch den Benutzer notwendig ist und/oder ohne dass es notwendig ist, dass der Benutzer den ID-Geber an sich nimmt. Insbesondere soll die Betätigung ferner für unterschiedliche, serienmäßige ID-Geber, vorzugsweise innerhalb einer Behältervorrichtung, möglich sein.

Die voranstehende Aufgabe wird gelöst durch eine Behältervorrichtung mit den Merkmalen des Anspruchs 1, eine Einlage mit den Merkmalen des Anspruchs 6, ein Behältersystem mit den Merkmalen des Anspruchs 10 sowie ein Verfahren mit den Merkmalen des Anspruchs 11.

Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Behältervorrichtung beschrieben worden sind, selbstverständlich auch im Zusammenhang mit der erfindungsgemäßen Einlage, dem erfindungsgemäßen Behältersystem und/oder dem erfindungsgemäßen Verfahren und jeweils umgekehrt, sodass bezüglich der Offenbarung zu den einzelnen Erfindungsaspekten stets wechselseitig Bezug genommen wird bzw. werden kann. Erfindungsgemäß weist die Behältervorrichtung zur Aufbewahrung eines ID-Gebers in einem Fahrzeug ein Schlüsselfach mit einer Kavität auf, in welcher der ID-Geber aufbewahrbar ist. Ferner weist die Behältervorrichtung einen Betätigungsmechanismus auf, durch welchen eine Betätigung zumindest eines ersten Bedienelementes des ID-Gebers (insbesondere mechanisch, vorzugsweise ausschließlich mechanisch) ausführbar ist, insbesondere wenn der ID-Geber in der Kavität positioniert ist. Dabei kann die Behältervorrichtung selbst per Funk (gemeint ist drahtlos) angesteuert und/oder kontrolliert werden.

Bei dem Fahrzeug kann es sich vorzugsweise um ein Carsharing-Fahrzeug handeln, welches lediglich temporär durch einen Benutzer ausleihbar ist. Unter dem ID-Geber kann vorteilhafterweise ein elektronischer Fahrzeugschlüssel verstanden werden, welcher durch Aussenden von Funksignalen insbesondere eine Fahrzeugfunktion auslösen kann. Dies kann bspw. dadurch ausführbar sein, dass der ID-Geber mit einem Fahrzeugsteuergerät in Datenkommunikation bringbar ist und/oder dass das Fahrzeugsteuergerät die Funksignale des ID-Gebers empfängt und bei korrekter Authentifizierung des ID-Gebers eine entsprechende Fahrzeugfunktion auslöst. Dabei können Datenkommunikationssignale der Datenkommunikation bspw. Authentifizierungsdaten, Ansteuerungsbefehle und/oder Erkennungsdaten umfassen. Erkennungsdaten können bspw. eine bestimmte Frequenz aufweisen, durch welche der ID-Geber und/oder die Präsenz des ID-Gebers identifizierbar sein kann. Vorzugsweise kann es sich bei der Fahrzeugfunktion dabei um einen Motorstart, eine Entriegelung einer Wegfahrsperre, und/oder ein Ver- und/oder Entriegeln einer Schließanlage, vorzugsweise eines Türschlosses, des Fahrzeugs handeln. Die Schließanlage kann z.B. eine Zentralverriegelung des Fahrzeugs umfassen. Dabei kann der ID-Geber insbesondere permanent Signale aussenden oder bei Betätigung des ersten Bedienelementes des ID-Gebers eine bestimmte Art von Funksignalen aussenden. Zusätzlich oder alternativ kann der ID-Geber einen passiven Transponder umfassen, zum Beispiel in Form eines RFID-Chips, welcher von außen durch Funksignale aktivierbar ist und entsprechende elektromagnetische Signale zurücksenden kann. Somit handelt es sich vorzugsweise bei dem ID-Geber um einen ID-Geber für ein Keyless Go-System, insbesondere für ein sogenanntes Passive Entry-System und/oder Passive Start-System. Bei derartigen System kann es ausreichen, dass eine Präsenz des ID-Gebers im Fahrzeug oder in einem bestimmten Umkreis festgestellt wird, um bestimmte Fahrzeugfunktionen freizuschalten. So kann bspw. die Schließanlage des Fahrzeugs automatisch entriegeln oder der Motorstart durch Betätigung eines Start/Stop-Schalters auslösbar sein. Dabei kann die Freigabe durch die Fahrzeugelektronik erfolgen, wobei vom ID-Geber ein entsprechendes Signal bereitgestellt werden kann. Die Kavität kann bspw. ein Hohlraum eines Schlüsselfaches sein, in welchem der ID-Geber aufbewahrbar ist. Die Kavität kann vorteilhafterweise verschließbar oder dauerhaft verschlossen ausgestaltet sein. Der Betätigungsmechanismus dient nun insbesondere zur mechanischen Betätigung des ID-Gebers bzw. eines Bedienelementes des ID-Gebers. Insbesondere kann durch das erste Bedienelement damit ein Signal des ID-Gebers ausgelöst werden, welches die Behältervorrichtung verlässt und eine Fahrzeugelektronik, die das Signal empfängt, ansteuert, sodass eine bestimmte Funktion, wie zum Beispiel eine Öffnung des Kofferraumes oder ein Entriegeln der Türschließanlage des Fahrzeuges, ausgelöst wird. Zur Betätigung kann der Betätigungsmechanismus zumindest einen Aktor aufweisen, welche mit dem ersten Bedienelement wirken kann. Insbesondere kann der Betätigungsmechanismus dazu ausgebildet sein, die Betätigung des ersten Bedienelementes zu bewirken, wenn der ID-Geber korrespondierend zum Betätigungsmechanismus in der Kavität positioniert ist und/oder der Betätigungsmechanismus aktiviert wird.

Dadurch kann es nicht notwendig sein, den ID-Geber dem Benutzer zu übergeben, damit dieser Zugang zum Fahrzeug erhält. Stattdessen lassen sich zumindest die wichtigsten oder sämtliche Funktionen des ID-Gebers durch den Betätigungsmechanismus bedienen. Vorzugsweise kann die Behältervorrichtung somit automatisiert ausgebildet sein, sodass der Betätigungsmechanismus ohne manuelle Einwirkung des Benutzers wirkt. Dadurch kann es ermöglicht sein, dass die Behältervorrichtung lediglich angesteuert wird, um den Betätigungsmechanismus auszulösen und somit das erste Bedienelement des ID-Gebers zu betätigen. Möchte ein Benutzer bspw. Zugang zum Fahrzeug von außen erhalten, wird die Behältervorrichtung entsprechend angesteuert, sodass der Betätigungsmechanismus auslöst, das erste Bedienelement betätigt und somit die Schließanlage des Fahrzeugs zum Entriegeln bringt. Dadurch kann der Benutzer Zugang zum Fahrzeug erhalten. Ein Motorstart kann bspw. möglich sein, wenn der ID-Geber gegenüber dem Fahrzeug verifiziert, dass dieser im Fahrzeug vorhanden ist, sodass, wenn der Benutzer das Fahrzeug verlässt, das Fahrzeug automatisch wieder verriegelt werden kann, bspw. indem ein zweites Bedienelement durch den Betätigungsmechanismus betätigt wird. Somit ist die Sicherheit des ID-Gebers und damit des Fahrzeugs insgesamt durch die Behältervorrichtung steigerbar, da es nicht notwendig ist, den ID-Geber dem Benutzer auszuhändigen oder im Handschuhfach zu hinterlegen. Vielmehr kann der ID-Geber in der Behältervorrichtung verbleiben. Zusätzlich oder alternativ kann die Behältervorrichtung als sicheres Depot für den ID-Geber verwendbar sein. So kann bspw. der Benutzer durch Verifikation gegenüber der Behältervorrichtung Zutritt zum Fahrzeug erhalten, indem der Betätigungsmechanismus das erste Bedienelement auslöst, während der ID-Geber sich in der Behältervorrichtung befindet. Anschließend ist es denkbar, dass der Benutzer den ID-Geber der Behältervorrichtung entnimmt und das Fahrzeug mit dem ID-Geber startet. Somit kann ein Diebstahlschutz verbessert sein. So kann die Behältervorrichtung bspw. tresorartig ausgebildet sein und daher eine größere Sicherheit bereitstellen als ein Handschuhfach eines Fahrzeugs. Ferner ist es durch eine erfindungsgemäße Behältervorrichtung möglich, einen serienmäßigen ID-Geber zu verwenden, sodass am Fahrzeug keine oder kaum Umrüstungen notwendig sind. So kann es ausreichen, dass die Behältervorrichtung in dem Fahrzeug platziert wird, um das Fahrzeug zum Carsharing-Fahrzeug umzurüsten. Insbesondere können dadurch keine weiteren Modifikationen der Schließanlage des Fahrzeugs notwendig sein, da der serienmäßige ID-Geber des Fahrzeugs verwendbar sein kann.

Vorzugsweise kann es sich bei der Behältervorrichtung um einen fernsteuerbaren Schlüsseltresor handeln. Vorzugsweise kann die Behältervorrichtung und/oder das Schlüsselfach ein Bauraumvolumen aufweisen, welches kleiner oder gleich 200mm x 150mm x 150mm ist. Dadurch kann die Behältervorrichtung in unterschiedlichsten Bereichen des Fahrzeugs platzierbar sein und die Optik Fahrzeugs und/oder des Innenraums nur geringfügig beeinflussen.

Der Betätigungsmechanismus weist bei einer erfindungsgemäßen Behältervorrichtung ferner ein Rotationselement auf, welches drehbar gelagert ist, wobei die Betätigung des ersten Bedienelementes durch eine Drehung des Rotationselementes ausführbar ist. Unter dem Rotationselement kann bspw. eine Welle verstanden werden, welche in die Kavität hineinragt, sodass bei Drehung des Rotationselementes mittelbar oder unmittelbar das erste Bedienelement betätigbar ist.

Im Rahmen der Erfindung kann vorgesehen sein, dass das Rotationselement zumindest teilweise in der Kavität angeordnet ist und/oder in die Kavität hineinragt. Dadurch kann das Bedienelement durch das Rotationselement direkt oder indirekt betätigbar sein. Im Gegensatz zu einem Stößel, welcher bspw. von außen in die Kavität hineingedrückt werden kann, um das erste Bedienelement zu betätigen, hat das Rotationselement, welches zumindest teilweise in der Kavität angeordnet ist oder in die Kavität hineinragt, den Vorteil, dass dieses nicht einfach entnehmbar ist und somit gegenüber der Kavität eine Einbruchsicherheit darstellt. Darüber hinaus ist das drehbare Rotationselement bauraumsparend anordbar. So kann das Rotationselement bspw. nur an einem Ende oder an beiden Enden aus der Kavität herausragen und dort bspw. eine Kupplung mit einem Getriebe aufweisen. Vorzugsweise kann die Kupplung bspw. ein Mehrkantprofil umfassen, so dass ein Zahnrad des Getriebes auf das Rotationselement aufsteckbar ist und formschlüssig mitnehmbar ist bzw. das Rotationselement formschlüssig durch das Zahnrad mitnehmbar ist, so dass in Längsrichtung des Rotationselementes Bauraum der Behältervorrichtung reduziert sein kann.

Bei einer erfindungsgemäßen Behältervorrichtung ist zumindest ein erster Steuerkörper am Rotationselement angeordnet. Vorzugsweise kann der erste Steuerkörper einstückig mit dem Rotationselement ausgebildet sein oder verschiebbar am Rotationselement angeordnet sein. Der erste Steuerkörper kann vorzugsweise dazu ausgebildet sein, das Bedienelement zu betätigen, wenn sich das Rotationselement dreht. Wenn der erste Steuerkörper einstückig mit dem Rotationselement ausgebildet ist, kann die bauliche Einheit des ersten Steuerkörpers und des Rotationselementes, z.B. in einem Gießverfahren, besonders einfach herstellbar sein. Ferner ergibt sich durch eine einstückige Ausbildung gleichzeitig eine sichere Befestigung des ersten Steuerkörpers am Rotationselement, so dass kein zusätzlicher Befestigungsaufwand notwendig sein kann und gleichzeitig das Rotationselement beliebig ausgestaltet sein kann. Vorzugsweise kann es sich somit um ein Schmiede- oder Gussteil handeln. Sind das Rotationselement und der erste Steuerkörper zweiteilig ausgebildet, kann der Steuerkörper bspw. eine komplexere Form aufweisen, da dieser individuell gefertigt sein kann. Ferner ist es möglich, das gleiche Rotationselement mit unterschiedlichen Steuerkörpern individuell auszustatten. So kann bspw. für einen bestimmten Fahrzeugtyp ein bestimmter Steuerkörper vorgesehen sein, welcher entsprechend passend zum ID-Geber des jeweiligen Fahrzeugtypen ausgebildet sein kann. Somit kann bspw. bei der Montage der Behältervorrichtung der erste Steuerkörper individuell anpassbar sein und am Rotationselement befestigbar sein.

Im Rahmen der Erfindung kann ferner vorgesehen sein, dass der erste Steuerkörper entlang einer Drehachse des Rotationselementes axial verschiebbar am Rotationselement angeordnet ist. Durch eine axiale Verschiebbarkeit des Steuerkörpers am Rotationselement kann der erste Steuerkörper vorzugsweise in seiner Position am Rotationselement individuell an den ID-Geber und/oder die Position des ID-Gebers in der Kavität anpassbar sein. So ist es bspw. denkbar, dass der ID-Geber in der Kavität in unterschiedlichen Positionen einlegbar ist und es somit erforderlich ist, die Position des ersten Steuerkörpers an die Position des ersten Bedienelementes des ID-Gebers der Kavität anzupassen. Auch wenn die Position des ID-Gebers in der Kavität vorgegeben ist, kann durch die Verschiebbarkeit ferner gewährleistet werden, dass die Kavität bzw. der Betätigungsmechanismus für den Betrieb unterschiedlicher ID-Geber geeignet ist.

Vorzugsweise kann bei einer erfindungsgemäßen Behältervorrichtung der erste Steuerkörper mit dem Rotationselement derart einen Formschluss bilden, dass ein Drehmoment vom Rotationselement auf den ersten Steuerkörper übertragbar ist. Somit kann der erste Steuerkörper bspw. axial verschiebbar am Rotationselement angeordnet sein und gleichzeitig kann durch den Formschluss gewährleistet werden, dass der Steuerkörper bei Drehung des Rotationselementes mitgenommen wird und eine Kraft bzw. ein Drehmoment übertragen kann. Dazu kann das Rotationselement im Querschnitt vorzugsweise ein Vielzahnprofil oder ein Vielkantprofil, besonders bevorzugt ein Vierkantprofil, aufweisen. So stellt bspw. ein Vielkantprofil des Rotationselementes eine einfache Möglichkeit dar, das Rotationselement derart zu gestalten, dass es kostengünstig herstellbar ist und gleichzeitig den Formschluss gewährleistet, um den Steuerkörper mitzunehmen. Denkbar ist hier auch ein ovales Profil, ein exzentrisches Profil oder dergleichen. Durch den Formschluss kann eine Kraftübertragung bzw. Drehmomentübertragung begünstigt sein, und gleichzeitig eine Montierbarkeit und/oder axiale Verschiebbarkeit des ersten Steuerkörpers gewährleistet sein. Auch in Bezug auf Fertigungstoleranzen ergeben sich durch einen derartigen Formschluss Vorteile, sodass die Herstellbarkeit kostengünstig sein kann und gleichzeitig ein Spiel des Steuerkörpers am Rotationselement gering gehalten werden kann. Vorzugsweise weist der Steuerkörper dazu ein Negativprofil des Rotationselementes auf, durch welches das Rotationselement hindurchsteckbar sein kann.

Im Rahmen der Erfindung ist ferner denkbar, dass der erste Steuerkörper zumindest bereichsweise eine Vertiefung aufweist, durch welche die Position des ersten Steuerkörpers am Rotationselement formschlüssig mit einem Schienenelement fixierbar ist. Vorzugsweise kann dabei ein exzentrischer Verlauf, insbesondere ein Auslauf, der Vertiefung eine Steuerkontur zur Betätigung des ersten Bedienelementes bilden. Ist der erste Steuerkörper somit bspw. axial verschiebbar am Rotationselement angeordnet, kann durch die Vertiefung, welche mit einem Schienenelement wirken kann, gewährleistet sein, dass sich der Steuerkörper nicht mehr verschiebt, nachdem dieser mit dem Schienenelement in Position bzw. Wirkverbindung gebracht worden ist. Somit kann der Betätigungsmechanismus bspw. ein weiteres Betätigungsmittel aufweisen, welches das Schienenelement aufweist. Das Betätigungsmittel kann vorzugsweise als Stößel in der Kavität ausgebildet sein. Somit kann bspw. für jeden Fahrzeugtyp ein ID-Geber verwendbar sein, für welchen jedoch lediglich das Betätigungsmittel angepasst wird, während die weiteren Bauteile der Behältervorrichtung für unterschiedliche Fahrzeugtypen geeignet sein können. Die Steuerkontur kann vorzugsweise einen exzentrischen Verlauf aufweisen, sodass die Vertiefung des Steuerkörpers umlaufend in ihrer Tiefe variiert. Vorzugsweise weist die Steuerkontur somit einen exzentrischen Querschnitt, insbesondere einen Nocken, auf, welcher an einer Seite des Steuerkörpers tangential mit einem äußeren Umfang des ersten Steuerkörpers verläuft. Befindet sich somit zunächst das Schienenelement in der Vertiefung in fixierter Position des Steuerkörpers, kann eine Drehung des Rotationselementes auch den Steuerkörper dazu veranlassen, sich zu drehen und somit die Steuerkontur auf dem Schienenelement abzuwälzen. Aufgrund des exzentrischen Verlaufs kann somit das Schienenelement durch den ersten Steuerkörper verstellt werden, insbesondere heruntergerückt werden, und somit kann durch das Betätigungsmittel das erste Bedienelement betätigt werden. Es kann daher durch den Betätigungsmechanismus mit dem Steuerkörper eine Umwandlung einer rotatorischen Bewegung in eine translatorische Bewegung des Betätigungsmittels realisiert sein. Üblicherweise werden serienmäßige ID-Geber dazu ausgebildet, dass diese manuell mit einem Finger betätigt werden, sodass das erste Bedienelement bspw. dazu ausgelegt sein kann, auf einen Druck bzw. eine lineare Bewegung zu reagieren. Daher ist eine lineare Betätigung hier besonders von Vorteil, sodass ein Verschleiß des Bedienelementes des ID-Gebers reduziert sein kann.

Vorzugsweise kann bei einer erfindungsgemäßen Behältervorrichtung vorgesehen sein, dass der Betätigungsmechanismus derart ausgebildet ist, dass sich lediglich das eine Rotationselement von außen in die Kavität erstreckt. Somit können alle weiteren Bauteile des Betätigungsmechanismus außerhalb der Kavität oder innerhalb der Kavität angeordnet sein. Bspw. kann es vorgesehen sein, dass die Kavität in Bezug auf eine Einbruchsicherheit, Dichtigkeit gegenüber Umweltbedingungen wie Feuchtigkeit und/oder gegenüber einer Abschirmung von Funkwellen zur Manipulation des ID-Gebers und/oder des Fahrzeugs mittels des ID-Gebers abgeschirmt ist. Dadurch kann es ausreichen, das Rotationselement bzw. eine drehbare Führung des Rotationselements entsprechend abzusichern, wobei alle weiteren Bauteile entsprechend keine zusätzliche Absicherung benötigen bzw. die Absicherung der Kavität nicht beeinflussen können.

Vorzugsweise kann die Behältervorrichtung im Rahmen der Erfindung ferner eine Abschirmeinheit aufweisen, durch welche zumindest in einem Bereich der Kavität eine drahtlose Datenkommunikation des ID-Gebers mit dem Fahrzeug verhinderbar ist. Die Kavität kann zumindest teilweise durch die Abschirmeinheit gebildet wird. Somit kann in der gesamten Kavität die drahtlose Datenkommunikation des ID-Gebers mit dem Fahrzeug verhinderbar sein. Somit kann der ID-Geber in der Behältervorrichtung aufbewahrt werden, ohne dass dieser sich gegenüber dem Fahrzeug authentifiziert und die Fahrzeugelektronik damit annimmt, dass eine Fahrzeugfunktion ausgelöst werden soll. Somit kann es ausreichen, die Abschirmeinheit zu öffnen oder zu deaktivieren, um dem ID-Geber einen drahtlosen Datenkommunikationszugang mit dem Fahrzeug zu ermöglichen. So kann vorzugsweise der ID-Geber während des gesamten Auslösevorgangs der Fahrzeugfunktion in der Behältervorrichtung verbleiben, sodass lediglich die Abschirmung der Abschirmeinheit temporär aufgehoben werden kann, um die Aussendung der Signale zu ermöglichen. Insbesondere kann die Abschirmeinheit aktiv und/oder passiv ausgestaltet sein. Eine aktive Abschirmeinheit kann bspw. elektromagnetische Signale, insbesondere Störsignale, aussenden, welche Signale der drahtlosen Datenkommunikation überlagern und dadurch verhindern oder einschränken. Insbesondere kann vorgesehen sein, dass die Abschirmeinheit LF-Signale aussendet. Eine passive Abschirmeinheit kann z.B. durch entsprechende Ausgestaltungen der Kavität ein hinein- und/oder herausdringen von drahtlosen Signalen verhindern oder einschränken. Eine passive Abschirmeinheit hat den Vorteil, dass für die Abschirmwirkung keine Energie benötigt wird und die Abschirmeinheit damit unabhängig von einer Energiequelle, insbesondere einer fahrzeugseitigen Energiequelle, sein kann. Dabei kann es vorgesehen sein, dass der Benutzer bspw. in die Behältervorrichtung hineingreift, um eine Betätigung des ID-Gebers vorzunehmen oder überhaupt keinen Zugang zur Behältervorrichtung erhält, wenn der ID-Geber automatisch betätigt wird oder ohnehin insbesondere ständig elektromagnetische Signale aussendet oder aussenden kann und sich somit bei Aufheben der Abschirmung gegenüber dem Fahrzeug authentifiziert. Insbesondere kann die Behältervorrichtung damit dazu ausgebildet sein, in dem Fahrzeug nachgerüstet zu werden. Dadurch kann vorzugsweise ein serienmäßiges Fahrzeug in einfacher Art und Weise zum Carsharing-Fahrzeug umwandelbar sein. Insbesondere kann der ID-Geber unabhängig von dessen Bedienung (z.B. für Passive-Start-Systeme) in der Behältervorrichtung im Fahrzeug aufbewahrt werden, z.B. wenn das Fahrzeug den Benutzer wechselt, ohne dass Fahrzeugfunktionen durch den ID-Geber ausgelöst werden. Dadurch kann sich die Behältervorrichtung zum Einsatz mit unterschiedlichen Fahrzeugtypen eignen.

Es ist des Weiteren bei einer erfindungsgemäßen Behältervorrichtung denkbar, dass die Abschirmeinheit eine Auskleidung der Kavität und ein Abdeckelement umfasst, insbesondere wobei die Kavität im Verschlusszustand der Verschlusseinheit vollständig gegenüber einer drahtlosen Datenkommunikation isoliert ist. Die Auskleidung kann vorteilhafterweise metallisch ausgebildet sein und bspw. durch einen metallischen Einschub in ein Gehäuse die Kavität ausbilden. Zusätzlich oder alternativ kann die Auskleidung eine Metallfolie umfassen, welche schichtweise die Kavität zumindest bereichsweise umgibt. Das Abdeckelement kann vorzugsweise an einem Deckelelement eines Gehäuses der Verschlusseinheit angebracht sein, sodass im Verschlusszustand die Öffnung durch das Abdeckelement verschlossen wird, insbesondere so dass die Abschirmeinheit die Kavität im Verschlusszustand vollständig gegenüber der drahtlosen Datenkommunikation isoliert. Insbesondere kann das Abdeckelement eine Folie umfassen, welche auf dem Deckelelement der Verschlusseinheit angeordnet ist. Somit kann durch die Abschirmeinheit vorzugsweise ein faradayscher Käfig gebildet werden, welcher elektromagnetische Signale aus der Kavität heraus und/oder in die Kavität hinein unterbindet. Somit kann eine kostengünstige Art der passiven Ausgestaltung der Abschirmeinheit geschaffen sein, durch welche die drahtlose Datenkommunikation des ID-Gebers mit dem Fahrzeug verhinderbar ist. Somit kann es bspw. ausreichen, wenn die Auskleidung und/oder das Abdeckelement gitterartig ausgebildet sind, um die drahtlose Datenkommunikation davon abzuhalten, die Abschirmeinheit zu passieren. Dadurch kann bspw. weiteres Gewicht der Behältervorrichtung eingespart werden, sodass sich diese nicht oder nur wenig auf den Kraftstoffverbrauch des Fahrzeuges auswirkt.

Es ist im Rahmen der vorliegenden Erfindung denkbar, dass die Behältervorrichtung ein Außengehäuse aufweist, welches das Schlüsselfach und/oder die Verschlusseinheit zumindest teilweise oder vollständig umgibt und derart mit der Verschlusseinheit in Wirkverbindung steht, dass bei einem unbefugten Entfernen des Außengehäuses ein Überführen der Verschlusseinheit vom Verschlusszustand in den Öffnungszustand verhindert ist. So kann bspw. der insbesondere mechanische Sperrmechanismus in einem Normalzustand der Behältervorrichtung deaktiviert sein und erst bei Entfernen des Außengehäuses aktiviert werden, sodass der insbesondere mechanische Sperrmechanismus die Verschlusseinheit versperrt, welche daraufhin nicht mehr in den Öffnungszustand überführbar ist. So ist bspw. ein Bolzen denkbar, welcher entsprechend bei einer Demontage des Außengehäuses aktiviert wird und eine Sperrwirkung entfaltet. Somit kann eine doppelte Absicherung der Kavität gegeben sein, sodass unterhalb des Außengehäuses eine Öffnungs- und Schließbewegung der Verschlusseinheit möglich ist und gleichzeitig ein Zugang zum ID-Geber verhindert ist. Somit kann es bspw. vorgesehen sein, dass einem Benutzer des Fahrzeuges der ID-Geber gar nicht ausgehändigt wird, sondern lediglich die Verschlusseinheit unterhalb des Außengehäuses in den Öffnungszustand überführt wird, um eine Funktion, wie bspw. ein Aussenden eines Funksignals, des ID-Gebers freizugeben und nach einer entsprechenden Fahrzeugreaktion wieder in den Verschlusszustand überführt wird. Ein manuelles Eingreifen des Benutzers ist hier nicht notwendig.

Es ist ferner denkbar, dass das Schlüsselfach ein Gehäuse umfasst, insbesondere wobei das Gehäuse zumindest teilweise oder vollständig von dem Außengehäuse umgeben ist. Dadurch kann eine doppelte Absicherung der Kavität gegeben sein, wobei das Gehäuse vorzugsweise den Schlüssel beherbergt und das Außengehäuse das Gehäuse und die Verschlusseinheit umschließt. Wird nun das Außengehäuse unbefugt entfernt, bspw. durch Gewalt, kann der ID-Geber noch immer durch das Gehäuse im Schlüsselfach beherbergt sein und somit gegen Diebstahl abgesichert sein. Dadurch ergibt sich eine vergrößerte Sicherheit des ID-Gebers gegen Diebstahl. Insbesondere kann bei einer Entfernung des Außengehäuses vorgesehen sein, dass die Behältervorrichtung, insbesondere eine Elektronikeinheit der Behältervorrichtung, ein Signal aussendet, welches entsprechend auf einen versuchten Einbruch in die Behältervorrichtung hinweist. So kann dieses Signal bspw. durch einen externen Server empfangen werden, welcher eine Leitstelle informiert.

Bei einer erfindungsgemäßen Behältervorrichtung ist zumindest ein zweiter Steuerkörper vorgesehen, wobei durch den ersten Steuerkörper das erste Bedienelement des ID-Gebers betätigbar ist, wenn sich das Rotationselement in eine erste Drehrichtung dreht und durch den zweiten Steuerkörper ein zweites Bedienelement des ID-Gebers betätigbar ist, wenn sich das Rotationselement in eine zweite Drehrichtung dreht. Somit kann in einfacher Art und Weise sichergestellt sein, dass zwei unterschiedliche Funktionen des ID-Gebers, welche mit zwei unterschiedlichen Bedienelementen verknüpft sind, unabhängig voneinander ausgelöst werden können. Vorzugsweise kann auch ein weiteres Bedienelement vorgesehen sein, welches bspw. nach Betätigung des ersten Bedienelementes betätigbar ist, sodass bei Drehung in die erste Drehrichtung zuerst das erste Bedienelement betätigt wird und anschließend ein weiteres Bedienelement des ID-Gebers. Dies ist bspw. denkbar, wenn das Fahrzeug zunächst aufgeschlossen werden soll und anschließend abgeschlossen werden soll, beide Funktionen jedoch durch unterschiedliche Bedienelemente belegt sind. Vorzugsweise können der erste und der zweite Steuerkörper relativ zueinander versetzt am Rotationselement angeordnet sein, sodass der exzentrische Verlauf der Steuerkontur des ersten Steuerkörpers einen Winkel zum exzentrischen Verlauf der Steuerkontur des zweiten Steuerkörpers aufweist. Ferner ergibt sich der Vorteil, dass dabei der erste und zweite Steuerkörper baugleich ausgebildet sein können, sodass sie in Serienfertigung kostengünstig herstellbar sein können und gleichzeitig unterschiedliche Funktionen realisieren können. Dies kann sich somit positiv auf eine reduzierte Komplexität der Fertigung und/oder Montage der Behältervorrichtung auswirken. Dabei ist es ferner denkbar, dass das Profil des Rotationselementes sich bereichsweise unterscheidet, insbesondere bereichsweise in seiner Orientierung unterscheidet. Dadurch kann bspw. ein Versatz des exzentrischen Verlaufs der Steuerkontur bzw. der Vertiefung der Steuerkörper bei der Montage automatisch herbeigeführt werden, ohne dass es notwendig ist, die korrekte Platzierung nachzuprüfen. Ferner ergibt sich dadurch der Vorteil, dass jeder Steuerkörper lediglich in einem Bereich des Rotationselements verschiebbar sein kann und somit nicht die Gefahr gegeben ist, dass sich mehrere Steuerkörper an einer Seite des Rotationselementes befinden, obwohl zumindest einer der Steuerkörper für ein Bedienelement an einer anderen Seite des Rotationselementes vorgesehen ist.

Im Rahmen der Erfindung ist ferner denkbar, dass ein Betätigungsantrieb vorgesehen ist, über den das Rotationselement antreibbar ist. Dadurch kann eine Automatisierung des Betätigungsmechanismus verbessert sein. So kann der Betätigungsantrieb vorzugsweise über eine eigene Energiequelle der Behältervorrichtung, bspw. eine Batterie, betreibbar sein, sodass die Behältervorrichtung unabhängig von einer Fahrzeugelektronik sein kann. Dadurch ist es nicht notwendig, die Behältervorrichtung an Schnittstellen des Fahrzeugs anzupassen oder an einer bestimmten Stelle im Fahrzeug zu positionieren. Vorzugsweise kann der Betätigungsantrieb einen Elektromotor umfassen, welcher das Rotationselement insbesondere über ein Getriebe antreiben kann. Somit ist es nicht notwendig, das Rotationselement manuell zu drehen. Insbesondere kann eine manuelle Einwirkung eines Benutzers nicht notwendig sein kann.

Bei einer erfindungsgemäßen Behältervorrichtung ist ferner denkbar, dass eine Elektronikeinheit vorgesehen ist, die mit dem Betätigungsmechanismus und/oder der Verschlusseinheit in Kommunikationsverbindung steht. Insbesondere kann die Elektronikeinheit ein Steuergerät der Behältervorrichtung umfassen. Durch die Elektronikeinheit kann weiterhin die Unabhängigkeit der Behältervorrichtung von einer Fahrzeugelektronik unterstützt sein, sodass der Betätigungsmechanismus und/oder die Verschlusseinheit automatisch aktivierbar sein können. Insbesondere kann die Elektronikeinheit dazu elektrisch und/oder drahtlos an den Betätigungsmechanismus und/oder die Verschlusseinheit und/oder einen Sperrmechanismus angeschlossen sein, um eine Funktion derselben zu gewährleisten. Die Elektronikeinheit kann somit vorzugsweise eine Schaltung und/oder einen Prozessor, vorzugsweise Mikroprozessor, umfassen, um die einzelnen Komponenten der Behältervorrichtung entsprechend ansteuern zu können.

Vorzugsweise kann bei einer erfindungsgemäßen Behältervorrichtung die Elektronikeinheit eine Kommunikationsschnittstelle aufweisen, insbesondere über welche die Elektronikeinheit ansteuerbar ist. Insbesondere kann die Elektronikeinheit über die Kommunikationsschnittstelle durch ein mobiles Endgeräte eines Benutzers. Bei dem mobilen Endgerät kann es sich vorzugsweise um ein Smartphone, Tablet oder dergleichen eines Benutzers handeln, welches dazu ausgebildet ist, mit der Elektronikeinheit zu kommunizieren. So kann bspw. ein Programm auf dem mobilen Endgerät installiert sein, welches die Kommunikationsschnittstelle ansteuern kann. Vorzugsweise handelt es sich bei der Kommunikationsschnittstelle um eine Schnittstelle zur Drahtloskommunikation, bspw. eine WLAN-Schnittstelle, Bluetooth-Schnittstelle, ZigBee-Schnittstelle, NFC-Schnittstelle, Mobilfunk-Schnittstelle oder dergleichen. Dadurch kann eine Ansteuerung der Elektronikeinheit bzw. der Behältervorrichtung vereinfacht sein. Zusätzlich oder alternativ kann die Kommunikationsschnittstelle kabelgebundene Schnittstelle, z.B. eine USB-Schnittstelle, umfassen. Die kabelgebundene Schnittstelle kann außen an der Behältervorrichtung zugänglich sein und/oder ein Zugang kann durch die kabelgebundene außen am Fahrzeug gewährleistbar sein. Zusätzlich oder alternativ ist es denkbar, dass die Elektronikeinheit mit einem externen Server in Kommunikationsverbindung bringbar ist. Dazu kann die Kommunikationsschnittstelle vorteilhafterweise eine Mobilfunk-Schnittstelle (z.B. GSM-Schnittstelle, UMTS-Schnittstelle oder LTE-Schnittstelle) umfassen. So kann es vorgesehen sein, dass sich der Benutzer bei dem Server via Internet und/oder Mobilfunk identifiziert bzw. Zutritt zum Fahrzeug verlangt. Wird serverseitig festgestellt, dass der Benutzer zum Zugang berechtigt ist, kann durch den Server die Behältervorrichtung ansteuerbar sein, welche z.B. die Abschirmung der Abschirmeinheit zumindest teilweise aufhebt, so dass aufgrund eines Signals des ID-Gebers eine Schließanlage des Fahrzeugs entsperrbar ist. Dadurch kann ein Benutzer somit mittelbar oder unmittelbar mit der Elektronikeinheit über die Kommunikationsschnittstelle in Kommunikationsverbindung treten, um die Behältervorrichtung zu bedienen bzw. Funktionen, bspw. des Betätigungsmechanismus und/oder der Verschlusseinheit, auszulösen. Insbesondere kann dadurch eine Authentifizierung des Benutzers auf den Server verlagert sein, so dass geringere Anforderungen in Hinblick auf die benötigte Rechenleistung der Elektronikeinheit gestellt werden können und diese damit kostengünstig ausgestaltet sein kann. Ferner kann durch die Elektronikeinheit und/oder die Kommunikationsschnittstelle ein automatisches Auslösen bestimmter Fahrzeugfunktionen unterstützt sein. Dadurch kann es bspw. nicht notwendig sein, dass ein Benutzer einen Zugang zum ID-Geber erhält und/oder dass ein spezielles Schloss am Fahrzeug vorgesehen wird, da die serienverbaute Schließanlage mit dem serienmäßigen ID-Geber verwendbar sein kann. Somit kann es ausreichen, die Behältervorrichtung in dem Fahrzeug anzuordnen, ohne dem Benutzer einen Zugang zum ID-Geber zu ermöglichen. Dadurch wiederum verbleibt der ID-Geber im Fahrzeug und geht nicht verloren. Vorzugsweise kann die Elektronikeinheit dazu ausgebildet sein, dass für jede Fahrzeugfunktion ein separater Zugangscode und/oder eine separates Authentifizierungssignal notwendig ist. So ist es bspw. denkbar, dass ein Benutzer mit einem ersten Zugangscode ein Entsperren der Schließanlage des Fahrzeugs auslösen kann und mit einem zweiten Zugangscode eine Freigabe zum Motorstart erhält. Ist der ID-Geber zur Verwendung mit einem Passive-Entry-System und/oder Passive-Start-System ausgebildet, kann bspw. eine Freigabe der entsprechenden Fahrzeugfunktion durch zumindest bereichsweises Aufheben der Abschirmung und/oder Betätigung eines Bedienelementes des ID-Gebers erfolgen.

Vorzugsweise kann zwischen dem Betätigungsantrieb und dem Rotationselement ein Getriebe vorgesehen sein. So kann bspw. eine Übersetzung einer Antriebskraft bzw. eines Antriebsdrehmoments vorgesehen sein, welche zum Beispiel von einem schnell drehenden Elektromotor auf eine langsame Bewegung des Rotationselementes übersetzen kann, um einen Verschleiß des Bedienelementes des ID-Gebers zu reduzieren. Gleichzeitig kann durch das Getriebe ein Bauraum in nahezu beliebiger Art und Weise überbrückbar sein, sodass bspw. eine Antriebsachse des Elektromotors parallel zum Rotationselement in der Behältervorrichtung angeordnet sein kann und das Getriebe, welches bspw. ein Stirnradgetriebe sein kann, dennoch für einen Antrieb des Rotationselementes sorgen kann.

Dadurch kann bspw. ein Bauraum der Behältervorrichtung reduziert werden.

Es ist im Rahmen der Erfindung denkbar, dass das Schlüsselfach derart ausgebildet ist, dass der ID-Geber formschlüssig in der Kavität aufnehmbar ist. Somit kann bspw. eine Schlüsselaufnahme vorgesehen sein, in welche der ID-Geber einlegbar ist, sodass Rotationselement und/oder die Steuerkörper mit dem Bedienelement des ID-Gebers wirken können. Dazu kann das Schlüsselfach eine entsprechende Aufnahme bereitstellen.

Vorzugsweise kann die Verschlusseinheit bei einer erfindungsgemäßen Behältervorrichtung ferner einen Sperrmechanismus aufweisen, durch welchen die Kavität gegen einen unbefugten Zugang sperrbar ist. Der Sperrmechanismus kann vorzugsweise eine mechanische Sperrwirkung aufweisen, durch welche eine Überführung der Verschlusseinheit vom Verschlusszustand in den Öffnungszustand unterbindbar ist. Ist der ID-Geber somit in der Kavität aufbewahrt, kann durch den Sperrmechanismus eine Sicherheit des ID-Gebers erhöht werden. Bei Carsharing-Fahrzeugen kann somit die Behältervorrichtung in dem Fahrzeug angebracht werden und der ID-Geber in der Behältervorrichtung aufbewahrt werden. Wechselt nun das Carsharing-Fahrzeug den Benutzer, findet der nachfolgende Benutzer den ID-Geber in der Behältervorrichtung und kann den mechanischen Sperrmechanismus bspw. über eine elektronische Authentifizierung entsperren. Ein Dieb, welcher sich unbefugt Zugang zum Fahrzeug verschafft, findet jedoch weiterhin lediglich die Behältervorrichtung vor und kann den ID-Geber nicht ohne Weiteres der Kavität entnehmen, da der Sperrmechanismus ihn daran hindert.

Gemäß einem weiteren Aspekt der Erfindung ist eine Einlage zur Aufbewahrung eines ID-Gebers in einer Kavität einer Behältervorrichtung beansprucht. Insbesondere kann es sich bei der Behältervorrichtung um eine erfindungsgemäße Behältervorrichtung handeln. Dabei weist die Einlage einen Aufnahmekörper auf, der eine Schlüsselaufnahme bildet, in welcher der ID-Geber, insbesondere formschlüssig, aufbewahrbar ist. Der Aufnahmekörper ist insbesondere mit dem ID-Geber in der Kavität anordbar. Ferner weist der Aufnahmekörper zumindest ein Betätigungsmittel auf, welches bei der Anordnung des Aufnahmekörpers in der Kavität mit einem Betätigungsmechanismus der Behältervorrichtung in Wirkverbindung bringbar ist, so dass, bei einer Aktivierung des Betätigungsmechanismus, durch das Betätigungsmittel eine Betätigungskraft auf ein erstes Bedienelement des ID-Gebers ausübbar ist.

Damit bringt eine erfindungsgemäße Einlage die gleichen Vorteile mit sich, wie sie bereits ausführlich mit Bezug auf eine erfindungsgemäße Behältervorrichtung beschrieben worden sind. Der Aufnahmekörper kann vorzugsweise einen Schaumstoff aufweisen und/oder als Tiefziehteil ausgebildet sein. Zusätzlich oder alternativ kann der Aufnahmekörper als Kunststoffspritzgussteil ausgebildet sein. Somit kann der Aufnahmekörper kostengünstig und reproduzierbar herstellbar sein. Durch die Einlage ist es ferner nicht notwendig, für jeden Fahrzeugtypen bzw. für jeden ID-Geber-Typen die Behältervorrichtung konstruktiv an diese anzupassen. Vielmehr kann eine individuelle Einlage vorgesehen sein, welche kostengünstig herstellbar sein kann. Dadurch kann die Funktionsweise der Behältervorrichtung für unterschiedliche ID-Geber-Typen erweitert werden. Gleichzeitig stellt die Einlage vorzugsweise eine Erweiterung des Betätigungsmechanismus der Behältervorrichtung dar, indem der Aufnahmekörper mit dem Betätigungsmechanismus in Wirkverbindung bringbar ist, wobei die eigentliche Betätigungskraft durch das Betätigungsmittel der Einlage auf den ID-Geber bzw. das erste Bedienelement des ID-Gebers ausgeübt werden kann. Somit kann bspw. eine rotatorische Betätigung des Betätigungsmechanismus der Behältervorrichtung in eine lineare Betätigungskraft umgewandelt werden, um einen Verschleiß des ID-Gebers zu reduzieren.

Vorzugsweise können das Betätigungsmittel und die Schlüsselaufnahme einstückig ausgebildet sein. Dazu kann das Betätigungsmittel bspw. mittels Filmscharnieren bewegbar zur Schlüsselaufnahme sein. Dadurch kann bspw. vorgesehen sein, dass die Einlage vollständig oder nahezu vollständig werkzeugfallend verwendet werden kann, nachdem diese bspw. in einem Gießverfahren hergestellt sein kann. Alternativ können das Betätigungsmittel und die Schlüsselaufnahme zumindest zweiteilig ausgebildet sein, sodass das Betätigungsmittel in den Aufnahmekörper eingesteckt wird. Vorzugsweise können der Aufnahmekörper und die Schlüsselaufnahme dabei einstückig vorgesehen sein. So kann die Schlüsselaufnahme als Hohlraum im Aufnahmekörper ausgebildet sein, sodass der ID-Geber in die Schlüsselaufnahme einlegbar ist. Durch eine zumindest zweiteilige Ausbildung von Betätigungsmittel und Schlüsselaufnahme können diese separat voneinander gefertigt werden und eine Möglichkeit der Relativbewegung zwischen dem Betätigungsmittel und der Schlüsselaufnahme kann sichergestellt sein. Weiterhin kann bspw. eine Führung des Betätigungsmittels im Aufnahmekörper vorgesehen sein, sodass das Betätigungsmittel formschlüssig im Aufnahmekörper angeordnet werden kann.

Vorzugsweise kann bei einer erfindungsgemäßen Einlage das Betätigungsmittel derart ausgebildet sein, dass die Betätigungskraft linear oder im Wesentlichen linear auf das erste Bedienelement ausübbar ist. So kann das Betätigungsmittel vorzugsweise als Stößel ausgebildet sein, welcher bspw. eine Rotationsbewegung des Betätigungsmechanismus der Behältervorrichtung in eine lineare Bewegung übersetzen kann. Durch eine lineare oder im Wesentlichen lineare Betätigung des ersten Bedienelementes kann ein Verschleiß des Bedienelementes reduziert sein, da derartige Bedienelemente von serienmäßigen ID-Gebern häufig dazu ausgebildet sind, auf einen manuellen Druck zu reagieren, sodass bspw. eine Reibung, welche aufgrund einer direkten rotatorischen Bewegung entsteht, sich ggf. negativ auswirken könnte. Das Betätigungsmittel kann ferner vorzugsweise verschleißarm ausgebildet sein und bspw. eine verschleißresistente Oberfläche aufweisen, so dass eine zuverlässige Bedienung des ersten Bedienelementes auch bei häufiger Betätigung des Betätigungsmittels durch den Betätigungsmechanismus der Behältervorrichtung erhalten bleibt.

Vorzugsweise kann bei einer erfindungsgemäßen Einlage die Schlüsselaufnahme zumindest eine Einleghilfe aufweisen, welche eine Orientierung des ID-Gebers in maximal zwei Positionen, vorzugsweise in lediglich einer Position, in der Schlüsselaufnahme sicherstellt. Insbesondere kann die Einleghilfe derart ausgestaltet sein, dass ein Sicherungselement bei falscher Orientierung des ID-Gebers nicht verschlossen werden kann, z.B. weil der ID-Geber in der Schlüsselaufnahme hervorsteht. Die Einleghilfe kann vorzugsweise eine Negativform des ID-Gebers aufweisen, sodass dieser formschlüssig in die Schlüsselaufnahme einlegbar ist, wobei lediglich eine Oberseite oder eine Unterseite des ID-Gebers zum Betätigungsmittel ausgerichtet sein kann. Ferner kann bspw. die Einleghilfe einen Zapfen aufweisen, welcher mit einer ringförmigen Schlüsselringaufnahme des ID-Gebers in Wirkverbindung bringbar ist, sodass lediglich eine Position in der Schlüsselaufnahme durch den ID-Geber einnehmbar ist. Ferner können auch bspw. ein Firmenlogo oder andere Designelemente des ID-Gebers dazu genutzt werden, die Einleghilfe zu definieren, wobei die Einleghilfe dann bspw. eine negative Form des entsprechenden Firmenlogos aufweisen kann, sodass eine falsche Orientierung des ID-Gebers in der Schlüsselaufnahme leicht bemerkbar sein kann. Dadurch können fehlerhafte Montagen des ID-Gebers in der Einlege reduziert oder verhindert werden.

Im Rahmen der Erfindung ist ferner denkbar, dass der ID-Geber von einer ersten Seite des Aufnahmekörpers in die Schlüsselaufnahme einlegbar ist und die Betätigungskraft von einer zweiten Seite des Aufnahmekörpers auf das Betätigungsmittel und/oder das erste Bedienelement ausübbar ist. Dadurch kann das Betätigungsmittel unabhängig von einer Öffnung für den ID-Geber ausgebildet sein. Somit kann es nicht notwendig sein, die Betätigungsmittel erst nach Platzierung des ID-Gebers in der Schlüsselaufnahme zu montieren, sodass gegebenenfalls Fehlmontagen reduziert werden können.

Ferner kann bei einer erfindungsgemäßen Einlage vorgesehen sein, dass der Aufnahmekörper an der ersten Seite ein Sicherungselement aufweist, durch welches der ID-Geber in der Schlüsselaufnahme fixierbar ist. Vorzugsweise kann dabei das Sicherungselement einen Rastverschluss aufweisen. Somit kann der ID-Geber von der ersten Seite in die Einlage einlegbar sein und anschließend die Schlüsselaufnahme mit dem ID-Geber durch das Sicherungselement zumindest teilweise verschließbar sein, so dass der ID-Geber nicht aus der Schlüsselaufnahme herausfallen kann. Dadurch kann entsprechend die Einlage umgedreht werden, um diese bspw. in der Behältervorrichtung zu platzieren. Das Sicherungselement kann vorzugsweise einen Rastverschluss aufweisen, welcher einen Formschluss bewirkt, um das Sicherungselement am Aufnahmekörper zu fixieren. Dabei kann das Sicherungselement einstückig mit dem Aufnahmekörper ausgebildet sein oder mehrteilig, insbesondere zweiteilig. So kann das Sicherungselement bspw. über ein Filmscharnier mit dem Aufnahmekörper verbunden sein. Damit kann das Sicherungselement auch bei einer einstückigen Ausgestaltung zumindest bereichsweise von der Schlüsselaufnahme abhebbar sein. Durch den Rastverschluss ist eine einfache Möglichkeit gegeben, ohne zusätzliches Bauteil das Sicherungselement reversibel oder irreversibel am Aufnahmekörper zu befestigen und damit den ID-Geber in der Schlüsselaufnahme zu sichern. Insbesondere kann durch das Sicherungselement eine Vorspannung auf den ID-Geber ausgeübt werden, sodass dieser möglichst spielfrei in der Schlüsselaufnahme gelagert sein kann. Durch eine möglichst spielfreie Lagerung des ID-Gebers in der Schlüsselaufnahme kann eine Wahrnehmung der Behältervorrichtung durch den Benutzers insbesondere während der Fahrt verbessert sein. Ferner kann sich eine sichere Lagerung positiv auf die Lebensdauer der Behältervorrichtung und/oder des ID-Gebers auswirken.

Im Rahmen der Erfindung ist ferner denkbar, dass die Einlage zumindest einen Einlaufpfad aufweist, durch welchen ein erste Steuerkörper des Betätigungsmechanismus und die Einlage zueinander ausrichtbar sind. Vorzugsweise kann der Einlaufpfad dabei trichterförmig ausgestaltet sein. So kann die Einlage bspw. dazu geeignet sein, mit einem Betätigungsmechanismus der Behältervorrichtung zu wirken, welcher zumindest einen Steuerkörper aufweist, der axial verschiebbar an einem Rotationselement des Betätigungsmechanismus gelagert ist. Wird die Einlage in die Behältervorrichtung eingeschoben, sorgt der Einlaufpfad dafür, dass zumindest einer der Steuerkörper des Betätigungsmechanismus in dem Einlaufpfad geführt wird und schließlich bei vollständiger Positionierung der Einlage in der Behältervorrichtung die korrekte Position zum Betätigungsmittel aufweist. Dadurch kann eine Funktion der Behältervorrichtung bzw. der Einlage sichergestellt und damit das erste Bedienelement des ID-Gebers zuverlässig durch den Betätigungsmechanismus und das erste Betätigungsmittel betätigbar sein. Somit kann eine besonders einfache Montagemöglichkeit gegeben sein, bei welcher das Risiko einer Fehlmontage reduziert ist.

Vorzugsweise kann bei einer erfindungsgemäßen Einlage das Betätigungsmittel ein Schienenelement aufweisen, welches formschlüssig mit dem Betätigungsmechanismus, insbesondere mit dem Steuerkörper des Betätigungsmechanismus, in Wirkverbindung bringbar oder positionierbar ist. Durch das Schienenelement kann somit sichergestellt sein, dass der Steuerkörper des Betätigungsmechanismus bei korrekter Positionierung diese Position nicht wieder verlässt und somit eine Funktion der Behältervorrichtung bzw. des ID-Gebers sichergestellt ist. Dazu kann das Schienenelement vorzugsweise mit einer Vertiefung des Steuerkörpers des Betätigungsmechanismus wirken. So kann das Schienenelement vorzugsweise als Erhebung des Betätigungsmittels ausgebildet sein, welches an zumindest einer, vorzugsweise an zwei Seiten eine Vertiefung aufweist, sodass das Schienenelement bspw. von dem Steuerkörper zumindest teilweise umgreifbar ist. Dadurch kann zum einen ein zuverlässiger Formschluss und zum anderen eine Betätigungsfunktion des Betätigungsmittels gewährleistet sein, wenn eine Steuerkontur des ersten Steuerkörpers auf dem Schienenelement abwälzt.

Gemäß einem weiteren Aspekt der Erfindung ist ein Behältersystem beansprucht, welches eine erfindungsgemäße Behältervorrichtung sowie eine erfindungsgemäße Einlage aufweist. Dabei kann die Einlage vorzugsweise formschlüssig in ein Schlüsselfach, insbesondere in eine Kavität des Schlüsselfaches der Behältervorrichtung eingesetzt sein, wobei in die Einlage vorzugsweise ein ID-Geber eingesetzt sein kann. Somit bringt ein erfindungsgemäßes Behältersystem die gleichen Vorteile mit sich, wie sie ausführlich mit Bezug auf eine erfindungsgemäße Behältervorrichtung sowie eine erfindungsgemäße Einlage erläutert worden sind.

Gemäß einem weiteren Aspekt der Erfindung ist ein Verfahren zum Betätigen eines ID-Gebers für ein Fahrzeug beansprucht, wobei der ID-Geber währenddessen zumindest zeitweise oder während des gesamten Verfahrens in einer Behältervorrichtung aufbewahrt wird. Vorzugsweise handelt es sich bei der Behältervorrichtung um eine erfindungsgemäße Behältervorrichtung. Ferner umfasst das Verfahren folgende Schritte:
- Antreiben eines Betätigungsmechanismus der Behältervorrichtung,
- Betätigen eines ersten Bedienelementes des ID-Gebers infolge des Antreibens des Betätigungsmechanismus, insbesondere wobei ein Auslösen eines drahtlosen Kommunikationssignals erfolgt.

Damit bringt ein erfindungsgemäßes Verfahren die gleichen Vorteile mit sich, wie sie bereits ausführlich mit Bezug auf eine erfindungsgemäße Behältervorrichtung beschrieben worden sind. Das drahtlose Kommunikationssignal kann vorzugsweise ein Signal des ID-Gebers sein. Insbesondere ist der ID-Geber dem Fahrzeug zugeordnet, bspw. durch eine bestimmte Frequenz des Kommunikationssignals, die durch das Fahrzeug empfangbar ist. Vorzugsweise kann das Betätigen des ID-Gebers zumindest mittelbar einen Motorstart und/oder ein Ver- und/oder Entriegeln einer Schließanlage des Fahrzeugs auslösen. Somit ist es möglich, den ID-Geber in der Behältervorrichtung zu platzieren und insbesondere automatisch das erste Bedienelement zu betätigen. Dabei kann das Betätigen des ersten Bedienelementes vorzugsweise mechanisch vorgesehen sein, wobei das erste Bedienelement zum Beispiel heruntergedrückt werden kann. Dadurch ist es nicht notwendig, dem Benutzer des Fahrzeuges den ID-Geber auszuhändigen, um das Auslösen der Fahrzeugfunktion zu ermöglichen. Vielmehr kann das Auslösen durch den Betätigungsmechanismus stattfinden, wobei ein serienmäßiger ID-Geber verwendet werden kann. Das Antreiben des Betätigungsmechanismus kann manuell und/oder automatisch durchgeführt werden.

Im Rahmen der Erfindung ist ferner denkbar, dass das Antreiben des Betätigungsmechanismus ein Drehen eines Rotationselementes des Betätigungsmechanismus in eine erste Drehrichtung umfasst. Durch die Drehung des Rotationselementes kann die Betätigung des ersten Bedienelementes des ID-Gebers vorzugsweise mittelbar oder unmittelbar erfolgen.

Im Rahmen der Erfindung kann ferner vorgesehen sein, dass das Rotationselement über ein Getriebe angetrieben wird. Durch das Getriebe kann eine Übersetzung von einem Antrieb an das Rotationselement gewährleistet werden, wobei bspw. der Antrieb ein Elektromotor oder ein manueller Antrieb sein kann. Durch die Übersetzung kann eine Anpassung in der Drehzahl des Rotationselementes und/oder eine Anpassung der Kraftübertragung des Rotationselementes vorgenommen werden.

Im Rahmen der Erfindung ist ferner denkbar, dass das Drehen des Rotationselementes ein Drehen eines Steuerkörpers bewirkt und das Betätigen des ersten Bedienelementes folgende Schritte umfasst:
- Betätigen eines ersten Betätigungsmittels, indem der erste Steuerkörper auf das erste Betätigungsmittel wirkt,
- Betätigen des ersten Bedienelementes, indem das erste Betätigungselement auf das erste Bedienelement wirkt.

Somit ist es in einfacher Art und Weise möglich, eine rotatorische Bewegung des Rotationselementes in eine translatorische, insbesondere lineare, Bewegung des Betätigungsmittels umzusetzen. Dabei kann das Betätigungsmittel vorzugsweise Teil einer Einlage sein, welche in der Behältervorrichtung angeordnet ist, sodass lediglich die Einlage individuell an den ID-Geber angepasst sein kann. Insbesondere kann somit das Betätigungsmittel in seiner Position mit dem Steuerkörper an den ID-Geber angepasst sein bzw. an die Positionierung des Bedienelementes am ID-Geber. Somit kann die Positionierung des Steuerkörpers variabel ausgestaltet sein, die Konstruktion der Behältervorrichtung jedoch weiterhin auch über verschiedene Fahrzeugtypen einheitlich sein. Somit kann lediglich das Betätigungsmittel bzw. die Einlage an die jeweilige Ausgestaltung des ID-Gebers angepasst sein.

Bei einem erfindungsgemäßen Verfahren ist es ferner denkbar, dass folgende Schritte vorgesehen sind:
- Aufheben einer Abschirmung gegen eine drahtlose Datenkommunikation des ID-Gebers mit dem Fahrzeug durch Öffnen der Behältervorrichtung, und/oder
- Schließen der Behältervorrichtung.

Es kann vorgesehen sein, dass die Behältervorrichtung eine Abschirmeinheit aufweist, welche den ID-Geber gegenüber Funksignalen abschirmt. Dadurch kann ein Funksignal des ID-Gebers darin gehindert werden, die Behältervorrichtung zu verlassen und gleichzeitig ein Funksignal von außerhalb daran gehindert werden, zum ID-Geber durchzudringen, wenn dieser sich in der Behältervorrichtung befindet. Wird nun die Abschirmung aufgehoben, kann dadurch eine drahtlose Kommunikationsverbindung des ID-Gebers mit dem Fahrzeug bereitgestellt werden bzw. ermöglicht werden. So kann daraufhin bspw. das Drehen des Rotationselementes erfolgen, sodass das erste Bedienelement betätigt wird und der ID-Geber ein entsprechendes, mit der Funktion des ersten Bedienelementes korrespondierendes Funksignal, aussendet. Handelt es sich bspw. bei dem ID-Geber um einen ID-Geber, welcher permanent Signale aussendet bzw. dessen Präsenz im Fahrzeug durch die Fahrzeugelektronik erkennbar ist, indem dieser Signale aussendet oder indem dieser Signale empfängt, kann dies durch die Abschirmung verhindert werden und somit der ID-Geber im Fahrzeug platziert werden und in der Behältervorrichtung eingeschlossen werden, ohne dass das Fahrzeug durch einen Unbefugten benutzbar ist.

Im Rahmen der Erfindung ist ferner denkbar, dass zur Aufbewahrung des ID-Gebers folgende Schritte ausgeführt werden:
- Einsetzen des ID-Gebers in eine Einlage, insbesondere so dass der ID-Geber formschlüssig in einer Schlüsselaufnahme der Einlage fixiert ist,
- Einbringen, vorzugsweise Einschieben, der Einlage in eine Kavität der Behältervorrichtung.

Vorzugsweise kann es sich bei der Einlage um eine erfindungsgemäße Einlage handeln. Durch die Einlage ist es nicht notwendig, die Behältervorrichtung konstruktiv an jeden einzelnen ID-Geber-Typen anzupassen, welcher mit der Behältervorrichtung bzw. dem Betätigungsmechanismus bedient werden soll, sondern somit kann lediglich die Einlage an den jeweiligen ID-Geber-Typen angepasst sein. Eine formschlüssige Aufnahme in der Einlage garantiert gleichzeitig eine sichere Positionierung des ID-Gebers in der Behältervorrichtung, und das Einschieben bzw. Einbringen der Einlage in die Kavität ermöglicht auf eine einfache Art und Weise, Lage und ID-Geber in der Behältervorrichtung zu positionieren. Vorzugsweise kann das Einschieben somit einen Formschluss bewirken.

Vorzugsweise kann bei einem erfindungsgemäßen Verfahren vorgesehen sein, dass das Einsetzen des ID-Gebers in die Einlage ein Verschließen der Schlüsselaufnahme mittels eines Sicherungselementes umfasst. Somit kann der ID-Geber in die Schlüsselaufnahme eingesetzt werden und das Sicherungselement dafür sorgen, dass der ID-Geber in der Behältervorrichtung platziert bleibt. Durch das Verschließen mit dem Sicherungselement kann zum einen der ID-Geber fixiert, vorzugsweise vorgespannt werden, und zum anderen kann sichergestellt werden, dass der Monteur eine Rückmeldung erhält, dass der ID-Geber korrekt eingelegt ist, da andernfalls verhindert sein kann, dass das Sicherungselement verschließbar ist. Insbesondere kann das Sicherungselement einen Rastverschluss aufweisen und somit mit der Schlüsselaufnahme verrastet werden, um die Schlüsselaufnahme zu verschließen.

Im Rahmen der Erfindung kann ferner vorgesehen sein, dass beim Einbringen der Einlage in die Kavität zumindest der erste Steuerkörper automatisch entlang des Rotationselementes, vorzugsweise entlang einer Drehachse des Rotationselementes, zum ersten Bedienelement positioniert wird. So kann die Einlage bspw. einen trichterförmigen Einlaufpfad aufweisen, welcher den ersten Steuerkörper einfängt und an die richtige Position leitet, sodass dieser insbesondere über dem Betätigungsmittel positioniert wird. Dadurch kann in einfacher Art und Weise die sichere Position des Steuerkörpers sichergestellt werden, während gleichzeitig nicht notwendig sein kann, die gesamte Behältervorrichtung an jeden einzelnen ID-Geber-Typen anzupassen, wobei stattdessen die Einlage entsprechend angepasst sein kann.

Die Verfahrensschritte können bei einem erfindungsgemäßen Verfahren zumindest teilweise gleichzeitig oder zeitlich nacheinander ablaufen, wobei die Reihenfolge der Verfahrensschritte nicht auf die beschriebene Reihenfolge begrenzt ist, sodass einzelne Schritte in unterschiedlicher Reihenfolge durchführbar sind. Insbesondere können einzelne Schritte des Verfahrens wiederholt werden und/oder alle Schritte des Verfahrens können wiederholt werden.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Sämtliche aus den Ansprüchen, der Beschreibung oder den Zeichnungen hervorgehende Merkmale und/oder Vorteile, einschließlich konstruktiver Einzelheiten, räumlicher Anordnungen und Verfahrensschritte, können sowohl für sich als auch in den verschiedensten Kombinationen erfindungswesentlich sein. Dabei ist zu beachten, dass die Figuren nur beschreibenden Charakter haben und nicht dazu gedacht sind, die Erfindung in irgendeiner Form einzuschränken. Es zeigen:
- Fig. 1: eine erfindungsgemäße Behältervorrichtung in schematischer zumindest teilweise durchsichtiger Ansicht in einem ersten Ausführungsbeispiel,
- Fig. 2: ein Außengehäuse der erfindungsgemäßen Behältervorrichtung des ersten Ausführungsbeispiels,
- Fig. 3: die erfindungsgemäße Behältervorrichtung in schematischer Perspektivansicht im Öffnungszustand gemäß dem ersten Ausführungsbeispiel,
- Fig. 4: eine erfindungsgemäße Einlage mit der erfindungsgemäßen Behältervorrichtung des ersten Ausführungsbeispiels,
- Fign. 5a bis 5c: die Einlage des ersten Ausführungsbeispiels in schematischen Ansichten,
- Fig. 6: die erfindungsgemäße Behältervorrichtung, in welche die erfindungsgemäße Einlage eingesetzt ist, in schematischer Perspektivansicht gemäß dem ersten Ausführungsbeispiel,
- Fign. 7a und 7b: schematische Teilansichten des Betätigungsmechanismus der Behältervorrichtung des ersten Ausführungsbeispiels,
- Fig. 8: die erfindungsgemäße Behältervorrichtung des ersten Ausführungsbeispiels in schematischer Perspektivansicht in Darstellung ohne Außengehäuse,
- Fig. 9: ein erfindungsgemäßes Fahrzeug mit einer erfindungsgemäßen Behältervorrichtung in einem weiteren Ausführungsbeispiel,
- Fig.10: ein Notsperrsystem zur Verriegelung eines Außengehäuses einer erfindungsgemäßen Behältervorrichtung in einem weiteren Ausführungsbeispiel,
- Fig. 11: einen Ablauf von Verfahrensschritten eines erfindungsgemäßen Verfahrens in schematischer Darstellung in einem weiteren Ausführungsbeispiel.

In den nachfolgenden Figuren werden für die gleichen technischen Merkmale auch von unterschiedlichen Ausführungsbeispielen die identischen Bezugszeichen verwendet.

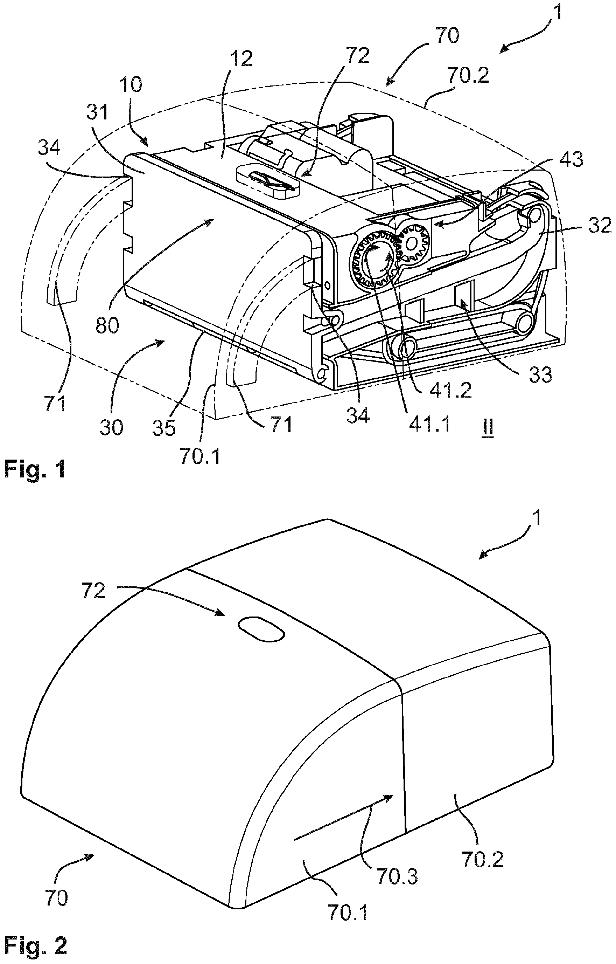

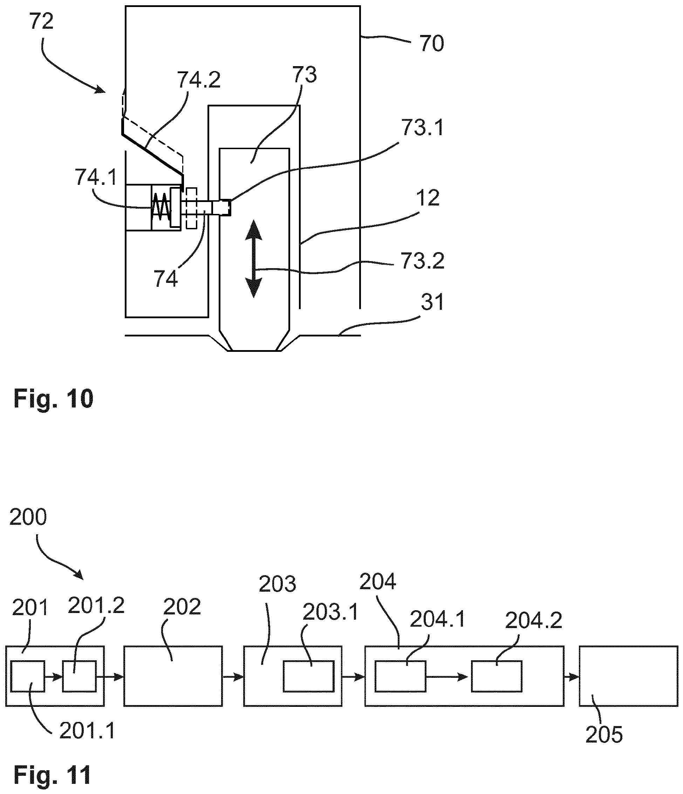

Fig. 1 zeigt eine erfindungsgemäße Behältervorrichtung 1 in schematischer Perspektivansicht gemäß einem ersten Ausführungsbeispiel. Dabei weist die Behältervorrichtung 1 ein Außengehäuse 70 auf, welches ein erstes Außengehäuseteil 70.1 und ein zweites Außengehäuseteil 70.2 umfasst. Durch die beiden Außengehäuseteile 70.1, 70.2 kann ein Schlüsselfach 10, in welchem ein ID-Geber 2 anordbar ist, in einfacher Art und Weise unterhalb des Außengehäuses 70 angeordnet werden bzw. können die Außengehäuseteile 70.1, 70.2 über dem Schlüsselfach 10 montiert werden, sodass dieses von außen unzugänglich ist. Unterhalb des Außengehäuses 70 befindet sich ferner ein Gehäuse 12 des Schlüsselfachs 10. Das Schlüsselfach 10 weist dabei innerhalb des Gehäuses 12 eine Kavität 11 auf, in welcher der ID-Geber 2, welcher insbesondere als Fahrzeugschlüssel dient, anordbar ist. Die Behältervorrichtung 1 weist dazu ferner eine Verschlusseinheit 30 auf, durch welche die Kavität 11 verschließbar ist. In Fig. 1 ist dabei ein Verschlusszustand II der Verschlusseinheit 30 dargestellt, in welcher ein Deckelelement 31 eine Öffnung 13 des Schlüsselfaches 10 verschließt. Dabei liegt das Deckelelement 31 am Gehäuse 12 und/oder einer Auskleidung 21 einer Abschirmeinheit 20 an, wobei die Auskleidung 21 zumindest bereichsweise in eine Nut 31.1 des Deckelelementes 31 hineinragt, so dass ein Formschluss für eine zuverlässige Absicherung sorgt. Die Abschirmeinheit 20 ist passiv ausgebildet, so dass eine drahtlose Datenkommunikation des ID-Gebers 2 verhinderbar ist, wenn die Abschirmung geschlossen ist. Insbesondere kann der ID-Geber 2 dadurch sicher in der Behältervorrichtung 1 aufbewahrt werden, ohne dass durch entsprechende Signale eine Fahrzeugfunktion mittels des ID-Gebers 2 auslösbar ist. Alternativ kann die Abschirmeinheit 20 aktiv ausgebildet sein und bspw. einen Sender umfassen, der durch Aussenden entsprechender Störsignale eine drahtlose Datenkommunikation des ID-Gebers 2 verhindern kann. Das Deckelelement 31 ist ferner zum einen durch ein Drehgelenk 35 am Gehäuse 12 angelenkt und zum anderen gelenkig mit einem Öffnungsarm 32 der Verschlusseinheit 30 verbunden. Bewegt sich der Öffnungsarm 32 somit in Richtung des Deckelelementes 31, schwenkt dieses um eine Drehachse des Drehgelenks 35 auf. Insbesondere kann ein Sperrmechanismus 80 ferner eine Selbsthemmung der Verschlusseinheit 30 umfassen. Der Öffnungsarm 32 ist dabei bogenförmig ausgebildet, wobei eine antriebsseitige Lagerung des Öffnungsarms 32 versetzt, insbesondere oberhalb, zu einer deckelseitigen Lagerung angeordnet ist. Bei Verstellung des Öffnungsarms 32 von einem Öffnungszustand I in den Verschlusszustand II ist insbesondere vorgesehen, dass der Öffnungsarm 32 über einen Totpunkt hinaus verstellt wird. Dies kann bspw. mittels eines Verschlussgetriebes realisiert sein, welches einen Exzenter aufweist, insbesondere wobei der bogenförmige Öffnungsarm 32 am Exzenter gelagert ist. Wird daraufhin von außen versucht, das Deckelelement 31 zu öffnen, wirkt der Öffnungsarm 32 selbstsichernd. Zusätzlich oder alternativ kann vorgesehen sein, dass das Verschlussgetriebe selbsthemmend ausgestaltet ist, z.B. indem das Verschlussgetriebe ein Schneckengetriebe umfasst. Dabei ist ferner ein Führungsmittel 71 des Außengehäuses 70 vorgesehen, welches während der Schwenkbewegung zum Öffnen des Deckelelementes 31 das erste Außengehäuseteil 70.1 gegenüber dem Deckelelement 31 mittels eines Gegenführungsmittels 34 derart sichert, dass das erste Außengehäuseteil 70.1 bei einer Öffnung des Deckelelementes 31 nicht abnehmbar ist. Dies stellt somit eine Sicherungsfunktion dar, welche einen Zugang eines Benutzers zum ID-Geber 2 auch in einem Öffnungszustand I der Behältervorrichtung 1 verhindert. So ist das Führungsmittel 71 des Außengehäuses 70 bogenförmig ausgebildet, so dass das Gegenführungsmittel 34 des Deckelelementes 31 bei der Öffnungsbewegung des Deckelelementes 31 permanent einen Formschluss mit dem Führungsmittel 71 aufweist. Zur Montage des ersten Außengehäuseteils 70.1 kann das Außengehäuse 70 dazu ausgebildet sein, dass das erste Außengehäuseteil 70.1 entlang einer Montagerichtung 70.3 aufgesteckt wird. Dabei kann das erste Außengehäuseteil 70.1 Rastmittel aufweisen, durch welche ein Formschluss mit dem Gehäuse 12 und/oder mit dem zweiten Außengehäuseteil 70.2 bewirkt sein kann. Insbesondere kann bei der Montage des ersten Außengehäuseteils 70.1 das Führungsmittel 71 mit dem Gegenführungsmittel 34 einen Formschluss bewirken. Verschwenkt das Deckelelement 31, ist somit eine Demontage des ersten Außengehäuseteils 70.1 nicht möglich, da das Gegenführungsmittel 34 und das Führungsmittel 71 eine Bewegung des ersten Außengehäuseteils 70.1 blockieren. Dadurch ist ein Diebstahlschutz des ID-Gebers 2 gewährleistet, wenn sich dieser innerhalb der Behältervorrichtung 1 befindet. Zusätzlich ist ferner ein Notsperrsystem 72 vorgesehen, durch welches das Außengehäuse 70, insbesondere das erste Außengehäuseteil 70.1 und/oder das zweite Außengehäuseteil 70.2 am Gehäuse 12 des Schlüsselfachs 10 gesichert sind. Dabei wirkt das Notsperrsystem 72 vorzugsweise in der Art einer Mausefalle. Bei einem Versuch, das Außengehäuse 70 zu demontieren, wird die Verschlusseinheit 30 vorzugsweise derart versperrt, dass ein Öffnen des Schlüsselfachs 10 unmöglich oder zumindest erschwert ist. Insbesondere ist das Notsperrsystem 72 Teil eines Sperrmechanismus 80, durch welchen eine Diebstahlsicherung der Behältervorrichtung 1 gegen einen unbefugten Zugriff auf den ID-Geber 2 verbessert sein kann. Eine beispielhafte Ausführung des Notsperrsystems 72 ist ferner in Figur 10 dargestellt.

Fig. 2 zeigt ferner das Außengehäuse 70 der Behältervorrichtung 1 in einem verschlossenen Zustand, wie dies auch für einen Benutzer im Fahrzeug sichtbar wäre. Insbesondere ist das Schlüsselfach 10 dabei von fünf Seiten, d.h. insbesondere in fünf Raumrichtungen, von dem Außengehäuse umgeben. Ist die Behältervorrichtung 1 dabei von der übrigen Seite an einer Fahrzeugkomponente 4 befestigt, kann ein Zugang zum Schlüsselfach 10 damit verhindert oder weiter erschwert sein.

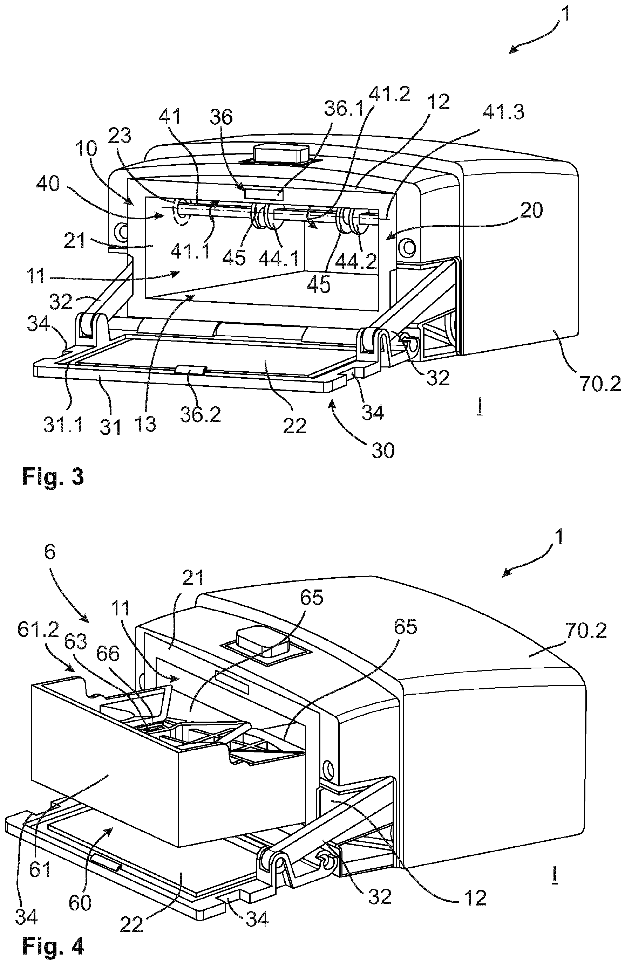

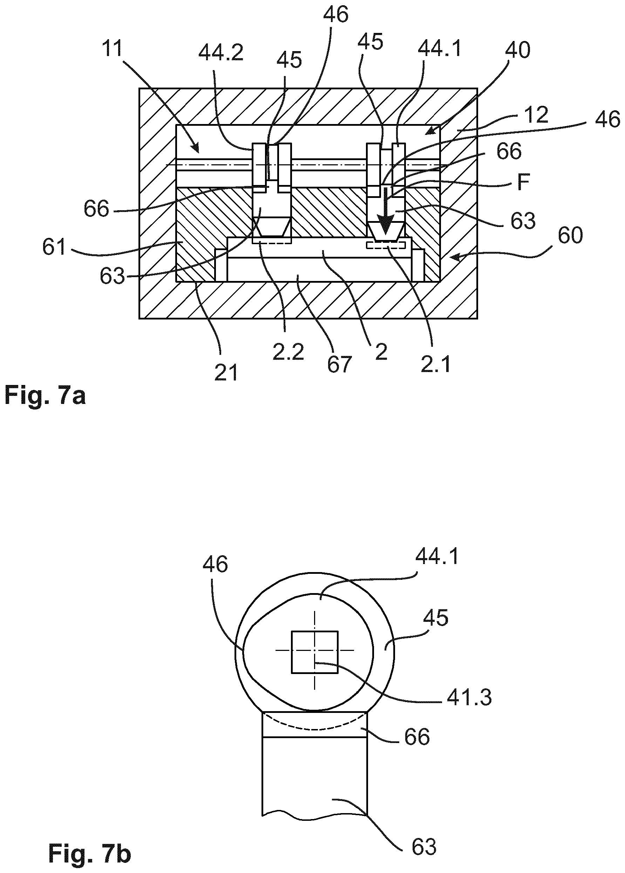

Fig. 3 zeigt das Schlüsselfach 10 der Behältervorrichtung 1 des ersten Ausführungsbeispiels in schematischer Perspektivansicht, wobei sich die Verschlusseinheit 30 in einem Öffnungszustand I befindet. Dabei ist die Abschirmeinheit 20 gezeigt, welche eine Auskleidung 21 und ein Abdeckelement 22 aufweist. Die Auskleidung 21 ist dabei als Einschub in dem Gehäuse 12 der Behältervorrichtung 1 ausgebildet. Insbesondere ist die Auskleidung 21 dabei als Gussteil, besonders bevorzugt als Zinkdruckgussteil, aufweisend ein Zamak-Material, ausgestaltet. Hier sind jedoch noch diverse weitere Ausführungsformen denkbar, wobei bspw. die Auskleidung 21 als metallische Folie in dem Gehäuse 12 vorgesehen sein kann, als Metalltextil oder dergleichen. Das Abdeckelement 22 ist insbesondere als metallische Folie am Deckelelement 31 angeordnet. Zusätzlich oder alternativ kann jedoch vorgesehen sein, dass das Abdeckelement 22 einstückig mit dem Deckelelement 31 ausgebildet ist. So kann bspw. die metallische Folie an das Deckelelement 31 angeschweißt sein oder das Deckelelement 31 vollständig aus Metall ausgebildet sein. Vorteilhafterweise kann die innere Oberfläche des Deckelelementes 31 das Abdeckelement 22 ausbilden. Insbesondere ist somit durch die Abschirmeinheit 20 zumindest im Verschlusszustand II ein Faraday'scher Käfig ausgebildet sein, so dass die Kavität 11 gegen drahtlose Kommunikationssignale, insbesondere elektromagnetische Signale, abgeschirmt ist. Ferner ist eine Verriegelung 36 des Sperrmechanismus 80 vorgesehen, durch welche das Deckelelement 31 am Schlüsselfach 10 feststellbar ist. Dazu weist das Deckelelement 31 ein erstes Verriegelungsteil 36.1 auf, das mit einem zweiten Verriegelungsteil 36.2 ein Überführen der Verschlusseinheit 30 vom Verschlusszustand II in den Öffnungszustand I verhindern kann. Insbesondere kann das erste Verriegelungsteil 36.1 als Riegel ausgestaltet sein und das zweite Verriegelungsteil 36.2 als Nut, in welche der Riegel eingreifen kann. Alternativ sind jedoch noch weitere Ausgestaltungen, insbesondere eine umgekehrte Anordnung oder eine Lasche, in welche ein Riegel eingreifen kann, denkbar. Durch das Gehäuse 12 mit der Auskleidung 21 der Abschirmeinheit 20 ist ferner die Kavität 11 ausgebildet, in welche der ID-Geber 2 einlegbar ist. Innerhalb der Kavität 11 ist zumindest ein Teil eines Betätigungsmechanismus 40 vorgesehen, um Bedienelemente 2.1, 2.2 des ID-Gebers 2 mechanisch zu betätigen. Dazu ragt ein Rotationselement 41 des Betätigungsmechanismus 40 als einziges Element des Betätigungsmechanismus 40 von außen in die Kavität 11 hinein. Dabei ist das Rotationselement 41 um eine Drehachse 41.3 rotatorisch gelagert, sodass die mechanische Betätigung des ID-Gebers 2 durch eine Rotation des Rotationselementes 41 in eine erste und/oder zweite Drehrichtung 41.2, 41.2 realisierbar ist. Um eine vollständige Abschirmung der Kavität 11 gegenüber elektromagnetischen Signalen gewährleisten zu können, weist die Abschirmeinheit 20 ferner eine Führung 23 auf, welche das Rotationselement 41 des Betätigungsmechanismus 40 rotatorisch lagert bzw. führt. Vorzugsweise kann die Führung 23 dabei als Kugellager (hier schematisch dargestellt) ausgebildet sein. Derartige Kugellager können bspw. als doppelte Kugellager und/oder als doppelt abgesicherte Kugellager ausgebildet sein, um die Abschirmung möglichst zuverlässig realisieren zu können. Ferner die Führung 23 dadurch zuverlässig und verschleißarm. Das Rotationselement 41 ist dabei als Vielkantwelle, insbesondere als Vierkantwelle, ausgebildet. Dadurch können ein erster und ein zweiter Steuerkörper 44.1, 44.2, deren Funktion im Weiteren, insbesondere in den Fign. 7a und 7b noch weiter ausgeführt wird, formschlüssig in Drehrichtung durch das Rotationselement 41 mitgenommen werden. Gleichzeitig kann eine Verschiebbarkeit der Steuerkörper 44.1, 44.2 auf dem Rotationselement 41 in Axialrichtung, d.h. entlang der Drehachse 41.3, noch gewährleistet sein, um deren Position an das jeweilige Modell des ID-Gebers 2 möglichst flexibel anpassen zu können.

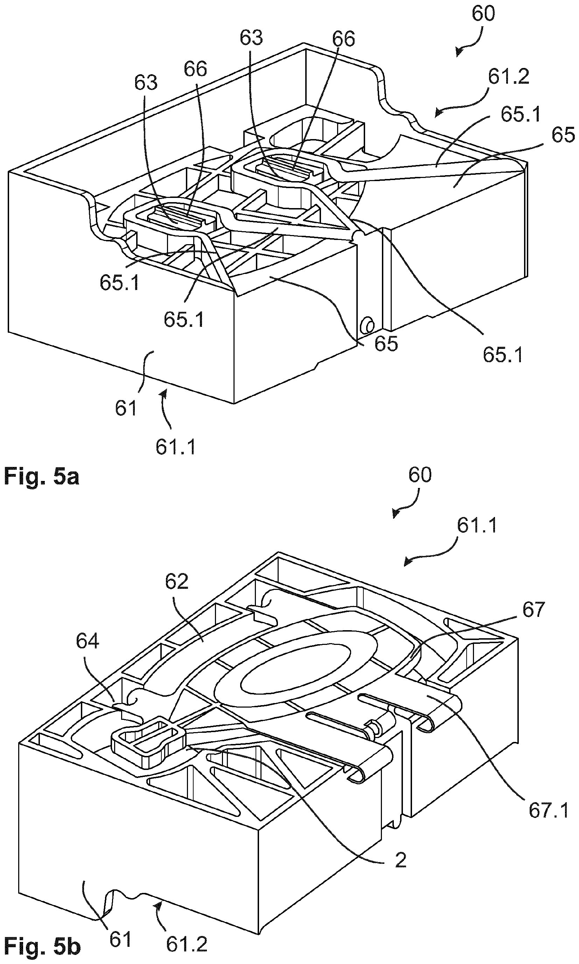

Fig. 4 zeigt dazu eine entsprechende Einlage 60, welche in die Behältervorrichtung 1 des Ausführungsbeispiels einschiebbar ist, um den ID-Geber 2 formschlüssig in der Kavität 11 anzuordnen. Die Einlage 60 ist ferner separat in den Fign. 5a bis 5c in perspektivischer Teilansicht dargestellt, wobei Fig. 5b die Einlage 60 mit einer ersten Seite 61.1 und Fig. 5a die Einlage 60 mit einer zweiten Seite 61.2 zeigt. Die Einlage 60 weist einen Aufnahmekörper 61 auf, der eine Schlüsselaufnahme 62 bildet. Die Schlüsselaufnahme 62 ist dabei als Ausnehmung der ersten Seite 61.1 des Aufnahmekörpers 61 ausgebildet. In der Schlüsselaufnahme 62 kann der ID-Geber 2 formschlüssig aufbewahrt werden, wozu an der ersten Seite 61.1 ferner ein Sicherungselement 67 vorgesehen ist, durch welches der ID-Geber 2 in der Schlüsselaufnahme 62 fixierbar ist. Das Sicherungselement 67 kann dabei einstückig mit dem Aufnahmekörper 61 ausgebildet sein und bspw. über ein Filmscharnier an dem Aufnahmekörper 61 angelenkt sein. Alternativ ist es denkbar, dass das Sicherungselement 67 bspw. als separates Bauteil ausgebildet ist. Insbesondere ist das Sicherungselement 67 ferner mittels eines Rastverschlusses 67.1 verschließbar. Die Schlüsselaufnahme 62 weist weiterhin eine Einleghilfe 64 auf, die eine Negativkontur des ID-Gebers 2 umfasst, sodass dieser möglichst passgenau in die Schlüsselaufnahme 62 eingesetzt werden kann. Durch die Einleghilfe 64 ist insbesondere eine Orientierung des ID-Gebers 2 in maximal zwei Positionen, vorzugsweise in lediglich einer Position, in der Schlüsselaufnahme 62 sichergestellt, d.h. eine Fehlorientierung nicht möglich oder bei der Montage schnell bemerkbar. Folgt die Einlegehilfe 64 der Kontur des ID-Gebers 2, ist schon einmal sichergestellt, dass dieser lediglich in zwei Positionen (Oberseite nach oben oder Unterseite nach oben) in der Schlüsselaufnahme 62 angeordnet werden kann. Darüber hinaus kann die Einleghilfe 64 eine Formgebung und/oder Besonderheiten des ID-Gebers 2 berücksichtigen, sodass lediglich eine Position durch den ID-Geber 2 in der Schlüsselaufnahme 62 einnehmbar ist. So kann bspw. eine Aussparung für ein hervorstehendes Logo oder ein weiteres Design- und/oder Funktionselement vorgesehen sein. Ferner kann bspw. eine Schräge vorgesehen sein, in welche eine Aussparung des ID-Gebers 2 einrastet. Insbesondere kann die Einleghilfe 64 einen Zapfen aufweisen, über welchen eine vorzugsweise exzentrische Schlüsselringaufnahme des ID-Gebers 2 aufsteckbar ist, sodass eine Fehlorientierung des ID-Gebers 2 verhindert ist. Die zweite Seite 61.2 der Einlage 60 weist ferner zwei Einlaufpfade 65 auf, welche trichterförmig ausgebildet sind. Dazu weisen die Einlaufpfade 65 Einlaufwandungen 65.1 auf, insbesondere welche schräg zueinander angeordnet sind. Die Einlaufpfade 65 sorgen beim Einschieben der Einlage 60 in die Kavität 11 der Behältervorrichtung 1 dafür, dass die Steuerkörper 44.1, 44.2 des Betätigungsmechanismus 40 der Behältervorrichtung 1 korrekt positioniert werden. Beim Einschieben der Einlage 60 können die Steuerkörper 44.1, 44.2, sofern diese nicht korrekt positioniert sind, gegen eine der Einlaufwandungen 65.1 des Einlaufpfades 65 stoßen und sich entsprechend beweglich am Rotationselement 41 des Betätigungsmechanismus 40 derart ausrichten, dass diese dem jeweiligen trichterförmigen Einlaufpfad 65 folgen. Dementsprechend können die Steuerkörper 44.1, 44.2 jeweils über einem Betätigungsmittel 63 der Einlage 60 positioniert werden. Die Betätigungsmittel 63 sind dabei als Stößel ausgebildet, welche durch den jeweiligen Steuerkörper 44.1, 44.2 herunterdrückbar sind. Hierzu weist jedes Betätigungsmittel 63 ein Schienenelement 66 auf, welches mit dem ersten und/oder zweiten Steuerkörper 44.1, 44.2 in Wirkverbindung bringbar ist.

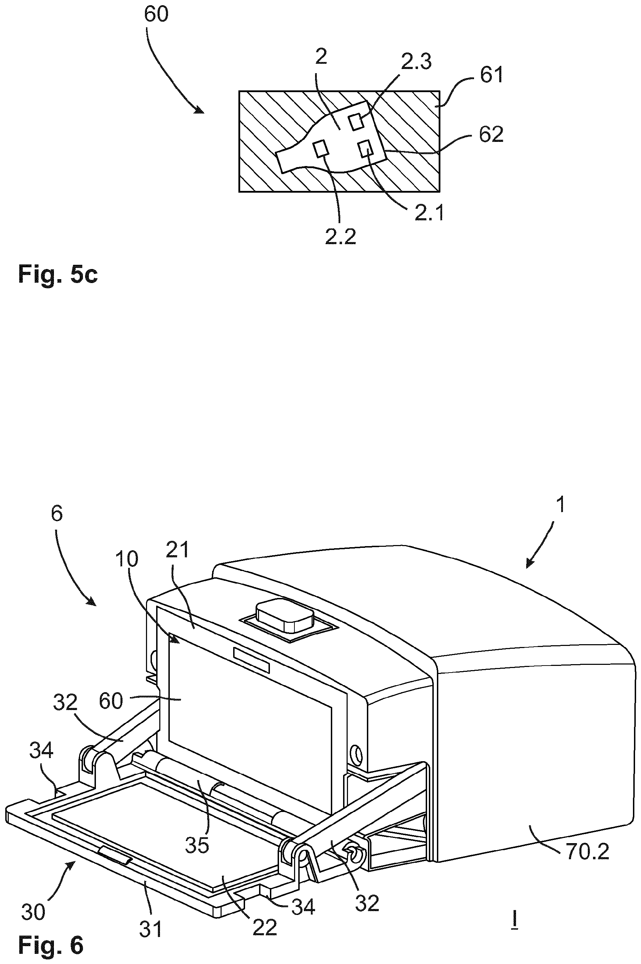

Wie in den Fign. 7a und 7b bzw. in Fig. 3 dargestellt ist, weist jeder Steuerkörper 44.1, 44.2 eine Vertiefung 45 auf, in welcher das Schienenelement 66 des Betätigungsmittels 63 positionierbar ist. Dabei zeigt Fig. 7a den Betätigungsmechanismus 40 innerhalb der Behältervorrichtung 1 bei eingesetzter Einlage 60 in schematischer, teilweise geschnittener Ansicht und Fig. 7b den ersten Steuerkörper 44.1 in einer schematischen Seitenansicht. Dreht sich das Rotationselement 41 des Betätigungsmechanismus 40, wird der erste und/oder zweite Steuerkörper 44.1, 44.2 entsprechend je nach Drehrichtung 41.1, 41.2 des Rotationskörpers 41 in eine erste Drehrichtung 41.1 oder eine zweite Drehrichtung 41.2 verstellt. Dabei läuft eine Steuerkontur 46 des jeweiligen Steuerkörpers 44.1, 44.2 entlang des Schienenelements 66. Die Steuerkontur 46 ist exzentrisch ausgeführt, insbesondere weist die Steuerkontur 46 einen Nockenabschnitt auf. Durch die Exzentrizität der Steuerkontur 46 wird somit das Betätigungsmittel 63 heruntergedrückt und betätigt dadurch mechanisch ein erstes und/oder zweites Bedienelement 2.1, 2.2. Fig. 5c zeigt die Einlage 60 in geschnittener Darstellung, wobei der ID-Geber 2 in der Einlage 60 eingelegt ist und die Steuerkörper 44.1, 44.2 jeweils mit einem der Bedienelemente 2.1, 2.2 wirken. Vorzugsweise kann der ID-Geber 2 ein weiteres Bedienelement 2.3 aufweisen, welches insbesondere keine für ein Carsharing relevante Fahrzeugfunktion zur Verfügung stellt. Somit üben die Steuerkörper 44.1, 44.2 bei Drehung des Rotationselementes 41 eine Betätigungskraft F auf zumindest eines der Bedienelemente 2.1, 2.2 des ID-Gebers 2 aus. Die Steuerkörper 44.1, 44.2 sind ferner relativ zueinander derart am Rotationselement 41 angeordnet, dass bei Rotation des Rotationselementes 41 in die erste Drehrichtung 41.1 einer der Steuerkörper 44.1, 44.2 das Betätigungsmittel 63 betätigt und bei Rotation des Rotationselementes 41 in die zweite Drehrichtung 41.2 der jeweils andere Steuerkörper 44.2, 44.1 das jeweils andere Betätigungsmittel 63 betätigt, sodass bspw. bei Drehung in die erste Drehrichtung 41.1 das erste Bedienelement 2.1 des ID-Gebers 2 mechanisch betätigbar ist und bei Drehung in die zweite Drehrichtung 41.2 das zweite Bedienelement 2.2 betätigbar ist. Vorzugsweise kann der Aufnahmekörper 61 der Einlage 60 aus Kunststoff und/oder Schaumstoff ausgebildet sein. Insbesondere kann der Aufnahmekörper 61 als Tiefziehteil ausgestaltet sein.

Fig. 6 zeigt ferner ein erfindungsgemäßes Behältersystem 6 in schematischer Teilansicht. Dabei ist die Behältervorrichtung 1 mit der Einlage 60 angeordnet, sodass der ID-Geber 2 in der Kavität 11 des Schlüsselfaches 10 formschlüssig angeordnet ist. Gemäß der Darstellung in der Fig. 6 befindet sich die Verschlusseinheit 30 in dem Öffnungszustand I, wobei eine drahtlose Datenkommunikation des ID-Gebers 2 nicht durch die Abschirmeinheit 20 verhindert ist.

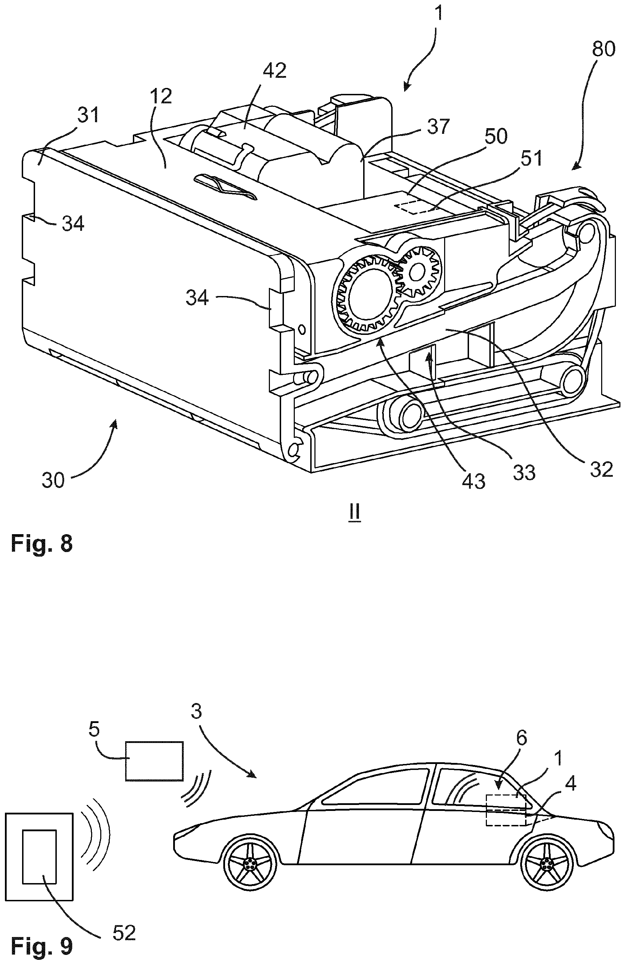

Fig. 8 zeigt ferner eine Teilansicht der Betätigungsvorrichtung 1, wobei die Verschlusseinheit 30 in einem Verschlusszustand II dargestellt ist. Damit ist eine drahtlose Datenkommunikation des ID-Gebers 2, welcher innerhalb des Schlüsselfachs 10 angeordnet ist, verhindert. Darüber hinaus ist in Fig. 8 dargestellt, dass der Öffnungsarm 32 in einer Führung 33 des Gehäuses 12 gelagert ist, sodass eine zuverlässige Verstellung des Deckelelementes 31 der Verschlusseinheit 30 gewährleistet werden kann. Darüber hinaus ist ein Getriebe 43 des Betätigungsmechanismus 40 abgebildet, durch welches eine Antriebsbewegung eines Betätigungsantriebs 42 auf das Rotationselement 41 übertragen werden kann. Dabei ist das Getriebe 43 vorzugsweise außerhalb der Kavität 11 angeordnet, sodass lediglich das Rotationselement sich in die Kavität 11 erstreckt. Ferner ist ein Verschlussantrieb 37 dargestellt, durch welchen die Verschlusseinheit 30 verstellbar sein kann. Vorzugsweise können der Verschlussantrieb 37 und der Betätigungsantrieb 42 baulich und/oder funktional gekoppelt sein. Der Verschlussantrieb 37 und/oder der Betätigungsantrieb 42 können ferner einen Elektromotor aufweisen. Darüber hinaus ist eine Elektronikeinheit 50 gezeigt, welche eine Kommunikationsschnittstelle 51 aufweist. Dabei steht die Elektronikeinheit 50 vorzugsweise mit der Verschlusseinheit 30 und/oder dem Betätigungsmechanismus 40 in Kommunikationsverbindung, sodass diese jeweils durch die Elektronikeinheit 50 aktivierbar sein können. Über die Kommunikationsschnittstelle 51 kann bspw. eine Datenverbindung mit einem mobilen Endgerät 52 des Benutzers hergestellt werden, sodass sich der Benutzer gegenüber der Elektronikeinheit 50 authentifizieren kann. Vorzugsweise umfasst die Kommunikationsschnittstelle 51 eine Bluetooth-Schnittstelle, eine WLAN-Schnittstelle, eine ZigBee-Schnittstelle, eine NFC-Schnittstelle, Mobilfunk-Schnittstelle oder dergleichen. Zusätzlich oder alternativ ist es denkbar, dass die Kommunikationsschnittstelle 51 ein Kabel umfasst, das an eine Außenseite des Fahrzeuges 3 führbar ist. Insbesondere kann die Kommunikationsschnittstelle 51 eine Mobilfunk-Schnittstelle aufweisen. Dadurch kann eine Authentifizierung des Benutzers z.B. mittels des mobilen Endgerätes 52, über das Internet und/oder über Mobilfunk an der Elektronikeinheit 50 erfolgen. Vorteilhafterweise kann ein externer Server 5 vorgesehen sein, mit dem der Benutzer insbesondere über das mobile Endgerät 52 kommunizieren kann. Stellt der Server 5 eine positive Authentifizierung des Benutzers fest, kann vorgesehen sein, dass der Server 5 über die Kommunikationsschnittstelle 51 die Behältervorrichtung 1 ansteuert bzw. der Elektronikeinheit 50 der Behältervorrichtung 1 ein entsprechendes Freigabe- und/oder Steuerungssignal sendet. Insbesondere kann der externe Server 5 Teil des Behältersystems 6 sein.

Fig. 9 zeigt ferner ein Fahrzeug 3 in schematischer Darstellung. Dabei ist ein Behältersystem 6 mit einer Behältervorrichtung 1 an einer Fahrzeugkomponente 4 angeordnet. Dabei kann ein ID-Geber 2, der insbesondere einen elektronischen Fahrzeugschlüssel für das Fahrzeug 3 umfasst, mittels einer Einlage 60 in der Behältervorrichtung 1 angeordnet sein. Vorzugsweise befindet sich die Behältervorrichtung 1 dabei in der Nähe der Heckscheibe des Fahrzeuges, sodass das Sichtfeld des Fahrers nicht oder nur geringfügig beeinflusst wird und gleichzeitig eine drahtlose Kommunikationsverbindung mit der Umgebung des Fahrzeuges, insbesondere mit einem mobilen Endgerät 52 des Benutzers des Fahrzeuges 3, möglich ist. Das mobile Endgeräte 52 kann z.B. ein Tablet oder ein Mobiltelefon, insbesondere Smartphone, sein. Weiterhin kann vorgesehen sein, dass der Benutzer über das mobile Endgerät 52 mit einem Server 5 in Verbindung tritt, wobei der Server 5 bei erfolgreicher Authentifizierung des Benutzers die Behältervorrichtung 1 ansteuern, d.h. z.B. ein Freigabesignal an die Behältervorrichtung 1 senden, kann. Ferner kann die Fahrzeugkomponente 4 z.B. einen Teil einer Fahrzeugkarosserie umfassen, an welchem eine besonders sichere Montage der Behältervorrichtung 1 bzw. des Behältersystems 6 möglich sein kann. Vorzugsweise kann die Behältervorrichtung 1 gemäß dem ersten Ausführungsbeispiel ausgebildet sein.

Somit ist es möglich, einen serienmäßigen ID-Geber 2 für das Fahrzeug 3 zu verwenden, ohne diesen dem Benutzer zur Verfügung zu stellen oder dem Benutzer nur für einen begrenzten Zeitraum zur Verfügung zu stellen und gleichzeitig eine sichere, insbesondere vom Fahrzeug 3 unabhängige, Aufbewahrungsmöglichkeit zu bieten. Insbesondere bei Carsharing-Angeboten hat dies den Vorteil, dass der Benutzer den ID-Geber 2 nicht versehentlich oder absichtlich entwenden bzw. verlieren kann und gleichzeitig auch eine Einbruchsicherung verbessert ist, wenn der ID-Geber 2 in der Behältervorrichtung 1 aufbewahrt wird. So kann es vorgesehen sein, dass der Benutzer unabhängig vom Fahrzeug 3 einen Zugangscode erhält, mit welchem er sich gegenüber der Behältervorrichtung 1 authentifizieren kann, so dass die Elektronikeinheit 50 den Betätigungsmechanismus 40 und/oder den Sperrmechanismus 80 und/oder die Verschlusseinheit 30 ansteuert. Es ist somit möglich, den ID-Geber 2 in der Behältervorrichtung 1 aufzubewahren, wobei in einem Verschlusszustand II der Behältervorrichtung 1 keine Funksignale des ID-Gebers 2 nach außen dringen können oder Funksignale von außen den ID-Geber 2 in der Kavität 11 erreichen können. In einem Öffnungszustand I ist es möglich, dass Kommunikationssignale aus der Behältervorrichtung 1 nach außen und/oder von außen in die Kavität 11 gelangen und/oder den ID-Geber 2 zu entnehmen. Dadurch kann eine Fahrzeugfunktion auslösbar sein. Insbesondere kann sich der ID-Geber 2 somit gegenüber der Fahrzeugelektronik authentifizieren und damit dem Benutzer bspw. Einlass gewähren, wenn die Schließanlage des Fahrzeugs 3 betätigt wird. Insbesondere kann auch bei ID-Gebern, welche mechanisch zu betätigen sind, der Betätigungsmechanismus 40 der Behältervorrichtung 1 dafür sorgen, dass diese automatisch betätigt werden können. Dazu kann eine individualisierte Einlage 60 vorgesehen sein, welche an den ID-Geber 2 angepasst ist. Sämtliche weitere Komponenten der Behältervorrichtung 1 können somit für unterschiedliche Fahrzeugtypen geeignet sein. Vorzugsweise kann dadurch lediglich ein Formwerkzeug zum Herstellen der Einlage 60 an den jeweiligen Fahrzeugtyp angepasst werden.

Fig. 10 zeigt ferner schematisch eine mögliche Ausgestaltung eines Notsperrsystems 72 einer Behältervorrichtung 1, wobei ein Hauptsperrelement 73 eine Verschlusseinheit 30 der Behältervorrichtung 1 sichert. Dabei ist ferner ein Nebensperrelement 74 vorgesehen, welches zur Sicherung des Hauptsperrelementes 73 geeignet ist. Das Nebensperrelement 74 ist dabei durch ein Vorspannmittel 74.1, vorzugsweise eine Feder, gegen einen Sicherungsabschnitt 74.2 vorgespannt. Der Sicherungsabschnitt 74.2 kann bspw. als insbesondere blechartiger Vorsprung des Außengehäuses 70 ausgebildet sein. Im Normalbetrieb der Behältervorrichtung 1 ist das Hauptsperrelement 73 entlang einer Bewegungsrichtung 73.2 bewegbar, so dass die Verschlusseinheit 30 z.B. gegen ein Öffnen eines Deckelementes 31 relativ zu einem Schlüsselfach 10, insbesondere einem Gehäuse 12 des Schlüsselfaches 10, der Behältervorrichtung 1 gesperrt werden kann bzw. das Öffnen durch Entriegelung des Hauptsperrelementes 73 entsperrt werden kann. Wird das Außengehäuse 70 unbefugt entfernt wird automatisch der Sicherungsabschnitt 74.2 gleichzeitig gelöst, so dass das Nebensperrelement 74 freigegeben ist. Dabei sorgt das Vorspannmittel 74.1 dafür, dass das Nebensperrelement 74 sich in Richtung des Hauptsperrelementes 73 bewegt und in eine Aussparung 73.1 des Hauptsperrelementes 73 eingreift (gestrichelt dargestellt). Dadurch wird eine Bewegung des Hauptsperrelementes 73 bei unbefugtem Entfernen des Außengehäuses 70 unmöglich oder zumindest deutlich erschwert. Dies wiederum verhindert ein Entsperren der Verschlusseinheit 30 insbesondere formschlüssig. Insbesondere ist damit eine Sicherheit der Behältervorrichtung 1 gegenüber unberechtigter Entnahme des ID-Gebers 2 aus der Kavität 11 durch das Notsperrsystem 72 verbessert.

Ferner zeigt Fig. 11 ein erfindungsgemäßes Verfahren 200 zum Auslösen einer Fahrzeugfunktion eines Fahrzeuges 3 durch einen ID-Geber 2. Der ID-Geber 2 wird währenddessen in einer Behältervorrichtung 1 aufbewahrt, welche insbesondere gemäß einem der vorangegangen Ausführungsbeispiele ausgebildet sein kann. Dabei ist vorgesehen, dass zur Aufbewahrung 201 des ID-Gebers ein Einsetzen 201.1 des ID-Gebers 2 in eine Einlage 60 erfolgt, insbesondere so dass der ID-Geber 2 formschlüssig in einer Schlüsselaufnahme 62 der Einlage 60 fixiert ist. Daraufhin kann die Einlage 60 durch Einbringen 201.2, vorzugsweise Einschieben, in die Kavität 11 in der Behältervorrichtung 1 angeordnet werden, sodass der ID-Geber 2 auch bei Fahrt des Fahrzeuges sicher in der Behältervorrichtung fixiert ist. Wird nun eine Fahrzeugfunktion benötigt, erfolgt ein Antreiben 203 mit einem Drehen 203.1 eines Rotationselementes 41 eines Betätigungsmechanismus 40 der Behältervorrichtung 1 in eine erste Drehrichtung 41.1. Insbesondere umfasst das Drehen 203.1 dabei ein Antreiben des Rotationselementes 41 über ein Getriebe 43, sodass eine Kraftübertragung angepasst werden kann und auch eine Drehzahl. Das Antreiben 203 kann vorzugsweise durch einen Elektromotor automatisch durchgeführt werden. Daraufhin erfolgt ein Betätigen 204 eines ersten Bedienelementes 2.1 des ID-Gebers 2. Das Betätigen 204 des Bedienelementes 2.1 kann dabei vorzugsweise ein Betätigen 204.1 eines ersten Betätigungsmittels 43 umfassen, indem ein Steuerkörper 44 auf das erste Betätigungsmittel 43 wirkt. Daraufhin erfolgt insbesondere ein Betätigen 204.2 des ersten Bedienelementes 2.1, indem das erste Betätigungselement 63 auf das erste Bedienelement 2.1 wirkt. Insbesondere kann das Betätigungsmittel 63 Teil der Einlage 60 sein. Dadurch ist eine Umsetzung einer Drehbewegung in eine lineare Bewegung möglich, wobei der ID-Geber 2 durch die Einlage 60 als serienmäßiger ID-Geber eine beliebige Form aufweisen kann, wobei gleichzeitig die Behältervorrichtung 1 wiederverwendbar ist und die Einlage 60 an unterschiedliche Formen von ID-Gebern angepasst werden kann bzw. unterschiedliche Einlagen 60 verwendet werden können. Vor der Betätigung 204 des Bedienelementes 2.1, insbesondere vor dem Antreiben 203 des Betätigungsmechanismus 40 kann ein Öffnen 202 der Behältervorrichtung 1 vorgesehen sein, so dass eine drahtlose Datenkommunikation des ID-Gebers 2 mit dem Fahrzeug 3 nicht durch eine Abschirmung verhindert wird. Anschließend, insbesondere nach einem vordefinierten Zeitintervall, erfolgt vorzugsweise ein Schließen 205 der Behältervorrichtung, um die Abschirmung um den ID-Geber 2 wiederherzustellen und eine drahtlose Datenkommunikation des ID-Gebers 2 mit dem Fahrzeug 3 zu verhindern.

Die voranstehende Erläuterung der Ausführungsformen beschreibt die vorliegende Erfindung ausschließlich im Rahmen von Beispielen.

### Bezuaszeichenliste

- 1: Behältervorrichtung
- 2: ID-Geber
- 2.1: erstes Bedienelement
- 2.2: zweites Bedienelement
- 2.3: weiteres Bedienelement
- 3: Fahrzeug
- 4: Fahrzeugkomponente
- 5: externer Server
- 6: Behältersystem

- 10: Schlüsselfach
- 11: Kavität
- 12: Gehäuse
- 13: Öffnung

- 20: Abschirmeinheit
- 21: Auskleidung
- 22: Abdeckelement
- 23: Führung

- 30: Verschlusseinheit
- 31: Deckelelement
- 31.1: Nut
- 32: Öffnungsarm
- 33: Führung
- 34: Gegenführungsmittel
- 35: Drehgelenk
- 36: Verriegelung
- 36.1: erstes Verriegelungsteil
- 36.2: zweites Verriegelungsteil
- 37: Verschlussantrieb

- 40: Betätigungsmechanismus
- 41: Rotationselement
- 41.1: erste Drehrichtung
- 41.2: zweite Drehrichtung
- 41.3: Drehachse
- 42: Betätigungsantrieb
- 43: Getriebe
- 44.1: erster Steuerkörper
- 44.2: zweiter Steuerkörper
- 45: Vertiefung
- 46: Steuerkontur

- 50: Elektronikeinheit
- 51: Kommunikationsschnittstelle
- 52: mobiles Endgerät

- 60: Einlage
- 61: Aufnahmekörper
- 61.1: erste Seite
- 61.2: zweite Seite
- 62: Schlüsselaufnahme
- 63: Betätigungsmittel
- 64: Einleghilfe
- 65: Einlaufpfad
- 65.1: Einlaufwandung
- 66: Schienenelement
- 67: Sicherungselement
- 67.1: Rastverschluss

- 70: Außengehäuse
- 70.1: erstes Außengehäuseteil
- 70.2: zweites Außengehäuseteil
- 70.3: Montagerichtung
- 71: Führungsmittel
- 72: Notsperrsystem
- 73: Hauptsperrelement
- 73.1: Aussparung
- 73.2: Bewegungsrichtung
- 74: Nebensperrelement
- 74.1: Vorspannmittel
- 74.2: Sicherungsabschnitt

- 80: Sperrmechanismus

- 200: Verfahrensschritt
- 201: Verfahrensschritt
- 201.1: Verfahrensschritt
- 201.2: Verfahrensschritt
- 202: Verfahrensschritt
- 203: Verfahrensschritt
- 203.1: Verfahrensschritt
- 204: Verfahrensschritt
- 204.1: Verfahrensschritt
- 204.2: Verfahrensschritt
- 205: Verfahrensschritt

- I: Öffnungszustand
- II: Verschlusszustand

- F: Betätigungskraft

## Patentansprüche

1. Behältervorrichtung (1) zur Aufbewahrung eines ID-Gebers (2) in einem Fahrzeug (3), aufweisend
ein Schlüsselfach (10) mit einer Kavität (11), in welcher der ID-Geber (2) aufbewahrbar ist,
**dadurch gekennzeichnet,**
**dass** ein Betätigungsmechanismus (40) vorgesehen ist, durch welchen eine Betätigung zumindest eines ersten Bedienelementes (2.1) des ID-Gebers (2) ausführbar ist,
wobei der Betätigungsmechanismus (40) ein Rotationselement (41) aufweist, welches drehbar gelagert ist, wobei die Betätigung des ersten Bedienelementes (2.1) durch eine Drehung des Rotationselementes (41) ausführbar ist,
wobei zumindest ein erster Steuerkörper (44.1) am Rotationselement (41) angeordnet ist,
wobei zumindest ein zweiter Steuerkörper (44.2) vorgesehen ist, wobei durch den ersten Steuerkörper (44.1) das erste Bedienelement (2.1) des ID-Gebers (2) betätigbar ist, wenn sich das Rotationselement (41) in eine erste Drehrichtung (41.1) dreht und durch den zweiten Steuerkörper (44.2) ein zweites Bedienelement (2.2) des ID-Gebers (2) betätigbar ist, wenn sich das Rotationselement (41) in eine zweite Drehrichtung (41.2) dreht.

2. Behältervorrichtung (1) nach Anspruch 1,
**dadurch gekennzeichnet,**
**dass** das Rotationselement (41) zumindest teilweise in der Kavität (11) angeordnet ist und/oder in die Kavität (11) hineinragt.

3. Behältervorrichtung (1) nach einem der vorhergehenden Ansprüche,
**dadurch gekennzeichnet,**
**dass** der erste Steuerkörper (44.1) einstückig mit dem Rotationselement (41) ausgebildet ist
und/oder dass der erste Steuerkörper (44.1) entlang einer Drehachse (41.3) des Rotationselementes (41) axial verschiebbar am Rotationselement (41) angeordnet ist und/oder dass der erste Steuerkörper (44.1) mit dem Rotationselement (41) derart einen Formschluss bildet, dass ein Drehmoment vom Rotationselement (41) auf den ersten Steuerkörper (44.1) übertragbar ist
und/oder dass der erste Steuerkörper (44.1) zumindest bereichsweise eine Vertiefung (45) aufweist, durch welche die Position des ersten Steuerkörpers (44.1) am Rotationselement (41) formschlüssig mit einem Schienenelement (66) fixierbar ist, insbesondere wobei ein exzentrischer Verlauf der Vertiefung (45) eine Steuerkontur (46) zur Betätigung des ersten Bedienelementes (2.1) bildet.

4. Behältervorrichtung (1) nach einem der vorhergehenden Ansprüche,
**dadurch gekennzeichnet,**
**dass** der Betätigungsmechanismus (40) derart ausgebildet ist, dass sich lediglich das eine Rotationselement (41) von außen in die Kavität (11) erstreckt und/oder dass ein Betätigungsantrieb (47) vorgesehen ist, über den das Rotationselement (41) antreibbar ist.

5. Behältervorrichtung (1) nach einem der vorhergehenden Ansprüche,
**dadurch gekennzeichnet,**
**dass** zwischen dem Betätigungsantrieb (47) und dem Rotationselement (41) ein Getriebe (43) vorgesehen ist
und/oder dass das Schlüsselfach (10) derart ausgebildet ist, dass der ID-Geber (2) formschlüssig in der Kavität (11) aufnehmbar ist.

6. Einlage (60) zur Aufbewahrung eines ID-Gebers (2) in einer Kavität (11) einer Behältervorrichtung (1), insbesondere einer Behältervorrichtung (1) nach einem der vorhergehenden Ansprüche, aufweisend
einen Aufnahmekörper (61), der eine Schlüsselaufnahme (62) bildet, in welcher der ID-Geber (2) aufbewahrbar ist,
wobei der Aufnahmekörper (61) in der Kavität (11) anordbar ist,
**dadurch gekennzeichnet,**
**dass** der Aufnahmekörper (61) zumindest ein Betätigungsmittel (63) aufweist, welches bei der Anordnung des Aufnahmekörpers (61) in der Kavität (11) mit einem Betätigungsmechanismus (40) der Behältervorrichtung (1) in Wirkverbindung bringbar ist, so dass, bei einer Aktivierung des Betätigungsmechanismus (40), durch das Betätigungsmittel (63) eine Betätigungskraft (F) auf ein erstes Bedienelement (2.1) des ID-Gebers (2) ausübbar ist.

7. Einlage (60) nach Anspruch 6,
**dadurch gekennzeichnet,**
**dass** das Betätigungsmittel (63) und die Schlüsselaufnahme (62) einstückig ausgebildet sind oder dass das Betätigungsmittel (63) und die Schlüsselaufnahme (62) zumindest zweiteilig ausgebildet sind
und/oder dass das Betätigungsmittel (63) derart ausgebildet ist, dass die Betätigungskraft (F) linear oder im Wesentlichen linear auf das erste Bedienelement (2.1) ausübbar ist.

8. Einlage (60) nach einem der vorhergehenden Ansprüche,
**dadurch gekennzeichnet,**
**dass** die Schlüsselaufnahme (62) zumindest eine Einleghilfe (64) aufweist, welche eine Orientierung des ID-Gebers (2) in maximal zwei Positionen, vorzugsweise in lediglich einer Position, in der Schlüsselaufnahme (62) sicherstellt
und/oder dass der ID-Geber (2) von einer ersten Seite (61.1) des Aufnahmekörpers (61) in die Schlüsselaufnahme (62) einlegbar ist und die Betätigungskraft (F) von einer zweiten Seite (61.2) des Aufnahmekörpers (61) auf das Betätigungsmittel (63) und/oder das erste Bedienelement (2.1) ausübbar ist
und/oder dass der Aufnahmekörper (61) an der ersten Seite (61.1) ein Sicherungselement (67) aufweist, durch welches der ID-Geber (2) in der Schlüsselaufnahme (62) fixierbar ist, insbesondere wobei das Sicherungselement (67) einen Rastverschluss (67.1) aufweist.

9. Einlage (60) nach einem der vorhergehenden Ansprüche,
**dadurch gekennzeichnet,**
**dass** die Einlage (60) zumindest einen Einlaufpfad (65) aufweist, durch welchen ein erster Steuerkörper (44.1) des Betätigungsmechanismus (40) und die Einlage (60) zueinander ausrichtbar sind, insbesondere wobei der Einlaufpfad (65) trichterförmig ausgestaltet ist
und/oder dass das Betätigungsmittel (63) ein Schienenelement (66) aufweist, welches formschlüssig mit dem Betätigungsmechanismus (40) der Behältervorrichtung (1), insbesondere dem erste Steuerkörper (44.1), in Wirkverbindung bringbar ist.

10. Behältersystem (6), aufweisend eine Behältervorrichtung (1) nach einem der Ansprüche 1 bis 5 sowie eine Einlage (60) nach einem der Ansprüche 6 bis 9.

11. Verfahren (200) zum Betätigen eines ID-Gebers (2) für ein Fahrzeug (3), wobei der ID-Geber (2) währenddessen zumindest zeitweise in einer Behältervorrichtung (1), insbesondere nach einem der Ansprüche 1 bis 5, aufbewahrt wird,
umfassend die folgenden Schritte:
- Antreiben (203) eines Betätigungsmechanismus (40) der Behältervorrichtung (1),
- Betätigen (204) eines ersten Bedienelements (2.1) des ID-Gebers (2) in Folge des Antreibens (203) des Betätigungsmechanismus (40), insbesondere wobei ein Auslösen eines drahtlosen Kommunikationssignals des ID-Gebers (2) erfolgt,
wobei der Betätigungsmechanismus (40) ein Rotationselement (41) aufweist, welches drehbar gelagert ist, wobei die Betätigung des ersten Bedienelementes (2.1) durch eine Drehung des Rotationselementes (41) ausführbar ist,
wobei zumindest ein erster Steuerkörper (44.1) am Rotationselement (41) angeordnet ist,
wobei zumindest ein zweiter Steuerkörper (44.2) vorgesehen ist, wobei durch den ersten Steuerkörper (44.1) das erste Bedienelement (2.1) des ID-Gebers (2) betätigt wird, wenn sich das Rotationselement (41) in eine erste Drehrichtung (41.1) dreht und durch den zweiten Steuerkörper (44.2) ein zweites Bedienelement (2.2) des ID-Gebers (2) betätigt wird, wenn sich das Rotationselement (41) in eine zweite Drehrichtung (41.2) dreht.

12. Verfahren (200) nach Anspruch 11,
**dadurch gekennzeichnet,**
**dass** das Antreiben (203) des Betätigungsmechanismus (40) ein Drehen (203.1) des Rotationselementes (41) des Betätigungsmechanismus (40) in die erste Drehrichtung (41.1) umfasst
und/oder dass das Rotationselement (41) über ein Getriebe (43) angetrieben wird..

13. Verfahren (200) nach einem der vorhergehenden Ansprüche,
**dadurch gekennzeichnet,**
**dass** das Drehen (203.1) des Rotationselementes (41) ein Drehen des Steuerkörpers (44.1) bewirkt und das Betätigen (204) des ersten Bedienelementes (2.1) folgende Schritte umfasst:
- Betätigen (204.1) eines ersten Betätigungsmittels (63), indem der erste Steuerkörper (44.1) auf das erste Betätigungsmittel (63) wirkt,
- Betätigen (204.2) des ersten Bedienelementes (2.1), indem das erste Betätigungselement (63) auf das erste Bedienelement (2.1) wirkt
und/oder dass ferner folgende Schritte vorgesehen sind:
- Aufheben einer Abschirmung gegen eine drahtlose Datenkommunikation des ID-Gebers (2) mit dem Fahrzeug (3) durch Öffnen (202) der Behältervorrichtung (1), und/oder
- Schließen (205) der Behältervorrichtung (1).

14. Verfahren (200) nach einem der vorhergehenden Ansprüche,
**dadurch gekennzeichnet,**
**dass** zur Aufbewahrung des ID-Gebers folgende Schritte ausgeführt werden:
- Einsetzen (201.1) des ID-Gebers (2) in eine Einlage (60), insbesondere sodass der ID-Geber (2) formschlüssig in einer Schlüsselaufnahme (62) der Einlage (60) fixiert ist,
- Einbringen (201.2), vorzugsweise Einschieben, der Einlage (60) in eine Kavität (11) der Behältervorrichtung (1)
und/oder dass das Einsetzen (201.1) des ID-Gebers (2) in die Einlage (60) ein Verschließen der Schlüsselaufnahme (62) mittels eines Sicherungselements (67) umfasst.

15. Verfahren (200) nach einem der vorhergehenden Ansprüche,
**dadurch gekennzeichnet,**
**dass** beim Einbringen (202) der Einlage (60) in die Kavität (11) zumindest der erste Steuerkörper (44.1) automatisch entlang des Rotationselementes (41) zum ersten Bedienelement (2.1) positioniert wird.

## Claims

1. Container device (1) for storing an ID transmitter (2) in a vehicle (3), comprising a key compartment (10) with a cavity (11) in which the ID transmitter (2) can be stored, **characterized in that**,
an actuating mechanism (40) is provided, by means of which actuation of at least a first operating element (2.1) of the ID transmitter (2) can be carried out,
wherein the actuating mechanism (40) has a rotary element (41) which is rotatably mounted, wherein the actuation of the first operating element (2.1) can be carried out by rotating the rotary element (41),
wherein at least a first control body (44.1) is arranged on the rotary element (41), wherein at least one second control body (44.2) is provided, wherein the first operating element (2.1) of the ID transmitter (2) can be actuated by the first control body (44.1) when the rotary element (41) rotates in a first direction of rotation (41.1) and a second operating element (2.2) of the ID transmitter (2) can be actuated by the second control body (44.2) when the rotary element (41) rotates in a second direction of rotation (41.2).

2. Container device (1) according to claim 1,
**characterized in that**
the rotary element (41) is arranged at least partially in the cavity (11) and/or projects into the cavity (11).

3. Container device (1) according to one of the preceding claims,
**characterized in that**
the first control body (44.1) is formed integrally with the rotary element (41) and/or **in that** the first control body (44.1) is arranged on the rotary element (41) so as to be axially displaceable along an axis of rotation (41.3) of the rotary element (41) and/or that the first control body (44.1) forms a positive fit with the rotary element (41) in such a way that a torque can be transmitted from the rotary element (41) to the first control body (44.1)
and/or **in that** the first control body (44.1) has a recess (45), at least in certain regions, by means of which the position of the first control body (44.1) on the rotary element (41) can be fixed in a form-fitting manner with a rail element (66), in particular wherein an eccentric course of the recess (45) forms a control contour (46) for actuating the first operating element (2.1).

4. Container device (1) according to one of the preceding claims,
**characterized in that**
the actuating mechanism (40) is designed such that only the one rotary element (41) extends from the outside into the cavity (11)
and/or that an actuating drive (47) is provided, via which the rotary element (41) can be driven.

5. Container device (1) according to one of the preceding claims,
**characterized in that**
a gear (43) is provided between the actuating drive (47) and the rotary element (41) and/or that the key compartment (10) is designed in such a way that the ID transmitter (2) can be accommodated in the cavity (11) with a positive fit.

6. Insert (60) for storing an ID transmitter (2) in a cavity (11) of a container device (1), in particular a container device (1) according to one of the preceding claims, comprising a receiving body (61) which forms a key receptacle (62) in which the ID transmitter (2) can be stored,
wherein the receiving body (61) can be arranged in the cavity (11),
**characterized in that**
the receiving body (61) has at least one actuating means (63) which, when the receiving body (61) is arranged in the cavity (11), can be brought into operative connection with an actuating mechanism (40) of the container device (1), so that, when the actuating mechanism (40) is activated, an actuating force (F) can be exerted by the actuating means (63) on a first operating element (2.1) of the ID transmitter (2).

7. Insert (60) according to claim 6,
**characterized in that**
the actuating means (63) and the key receptacle (62) are formed in one piece or that the actuating means (63) and the key receptacle (62) are formed in at least two parts and/or that the actuating means (63) is designed such that the actuating force (F) can be exerted linearly or substantially linearly on the first operating element (2.1).

8. Insert (60) according to one of the preceding claims,
**characterized in that**
the key receptacle (62) has at least one insertion aid (64) which ensures orientation of the ID transmitter (2) in a maximum of two positions, preferably in only one position, in the key receptacle (62)
and/or **in that** the ID transmitter (2) can be inserted into the key receptacle (62) from a first side (61.1) of the receiving body (61) and the actuating force (F) can be exerted on the actuating means (63) and/or the first operating element (2.1) from a second side (61.2) of the receiving body (61)
and/or **in that** the receiving body (61) has a securing element (67) on the first side (61.1), by means of which the ID transmitter (2) can be fixed in the key receptacle (62), in particular wherein the securing element (67) has a latching lock (67.1).

9. Insert (60) according to one of the preceding claims,
**characterized in that**
the insert (60) has at least one inlet path (65) by means of which a first control body (44.1) of the actuating mechanism (40) and the insert (60) can be aligned with respect to one another, in particular the inlet path (65) being designed in the shape of a funnel and/or **in that** the actuating means (63) has a rail element (66) which can be brought into operative connection with the actuating mechanism (40) of the container device (1), in particular the first control body (44.1), in a form-fitting manner.

10. Container system (6), comprising a container device (1) according to one of claims 1 to 5 and an insert (60) according to one of claims 6 to 9.

11. Method (200) for actuating an ID transmitter (2) for a vehicle (3), wherein the ID transmitter (2) is meanwhile stored at least temporarily in a container device (1), in particular according to one of claims 1 to 5,
comprising the following steps:
- driving (203) of an actuating mechanism (40) of the container device (1),
- actuating (204) a first operating element (2.1) of the ID transmitter (2) as a result of driving (203) the actuating mechanism (40), in particular wherein a wireless communication signal of the ID transmitter (2) is triggered,
wherein the actuating mechanism (40) has a rotary element (41) which is rotatably mounted, wherein the actuation of the first operating element (2.1) can be carried out by rotating the rotary element (41),
wherein at least a first control body (44.1) is arranged on the rotary element (41), wherein at least one second control body (44.2) is provided, wherein the first control body (44.1) actuates the first operating element (2.1) of the ID transmitter (2) when the rotary element (41) rotates in a first direction of rotation (41.1) and the second control body (44.2) actuates a second operating element (2.2) of the ID transmitter (2) when the rotary element (41) rotates in a second direction of rotation (41.2).

12. The method (200) according to claim 11,
**characterized in that**
the driving (203) of the actuating mechanism (40) comprises a rotation (203.1) of the rotatory element (41) of the actuating mechanism (40) in the first direction of rotation (41.1)
and/or that the rotary element (41) is driven via a gear (43).

13. The method (200) according to any one of the preceding claims,
**characterized in that**
the rotation (203.1) of the rotary element (41) causes the control body (44.1) to rotate and the actuation (204) of the first operating element (2.1) comprises the following steps:
- actuation (204.1) of a first actuating means (63) by the first control body (44.1) acting on the first actuating means (63),
- actuation (204.2) of the first operating element (2.1) by the first actuating means (63) acting on the first operating element (2.1)
and/or that the following steps are also provided:
- removal of a shield against wireless data communication of the ID transmitter (2) with the vehicle (3) by opening (202) the container device (1), and/or
- closing (205) the container device (1).

14. The method (200) according to any one of the preceding claims,
**characterized in that**
the following steps are carried out to store the ID transmitter:
- insertion (201.1) of the ID transmitter (2) into an insert (60), in particular so that the ID transmitter (2) is positively fixed in a key receptacle (62) of the insert (60),
- insertion (201.2), preferably insertion, of the insert (60) into a cavity (11) of the container device (1)
and/or that the insertion (201.1) of the ID transmitter (2) into the insert (60) comprises closing the key receptacle (62) by means of a securing element (67).

15. The method (200) according to any one of the preceding claims,
**characterized in that**
when the insert (60) is inserted (202) into the cavity (11), at least the first control body (44.1) is automatically positioned along the rotatory element (41) with respect to the first operating element (2.1).

## Revendications

1. Dispositif de récipient (1) pour stocker un transmetteur ID (2) dans un véhicule (3), comprenant
un compartiment à clé (10) avec une cavité (11) dans laquelle le transmetteur ID (2) peut être conservé,
**caractérisé en ce qu**'
il est prévu un mécanisme d'actionnement (40) par lequel un actionnement d'au moins un premier élément de commande (2.1) du transmetteur ID (2) peut être exécuté,
le mécanisme d'actionnement (40) présentant un élément de rotation (41) qui est logé de manière à pouvoir tourner, l'actionnement du premier élément de commande (2.1) pouvant être exécuté par une rotation de l'élément de rotation (41),
au moins un premier corps de commande (44.1) étant disposé sur l'élément de rotation (41),
au moins un deuxième corps de commande (44.2) étant prévu, le premier élément de commande (2.1) du transmetteur ID (2) pouvant être actionné par le premier corps de commande (44.1) lorsque l'élément de rotation (41) tourne dans un premier sens de rotation (41.1) et un deuxième élément de commande (2.2) du transmetteur ID (2) pouvant être actionné par le deuxième corps de commande (44.2) lorsque l'élément de rotation (41) tourne dans un deuxième sens de rotation (41.2).

2. Dispositif de récipient (1) selon la revendication 1,
**caractérisé en ce que**
l'élément de rotation (41) est disposé au moins partiellement dans la cavité (11) et/ou pénètre dans la cavité (11).

3. Dispositif de récipient (1) selon l'une quelconque des revendications précédentes, **caractérisé en ce que**
le premier corps de commande (44.1) est réalisé d'une seule pièce avec l'élément de rotation (41)
et/ou **en ce que** le premier corps de commande (44.1) est disposé sur l'élément de rotation (41) de manière à pouvoir être déplacé axialement le long d'un axe de rotation (41.3) de l'élément de rotation (41)
et/ou **en ce que** le premier corps de commande (44.1) forme une liaison par la forme avec l'élément de rotation (41) de telle sorte qu'un couple de rotation peut être transmis de l'élément de rotation (41) au premier corps de commande (44.1) et/ou **en ce que** le premier corps de commande (44.1) présente au moins par zones un renfoncement (45) par lequel la position du premier corps de commande (44.1) sur l'élément de rotation (41) peut être fixée par complémentarité de forme avec un élément de rail (66), en particulier un tracé excentrique du renfoncement (45) formant un contour de commande (46) pour l'actionnement du premier élément de commande (2.1).

4. Dispositif de récipient (1) selon l'une quelconque des revendications précédentes, **caractérisé en ce que**
le mécanisme d'actionnement (40) est conçu de telle sorte que seul l'un des éléments de rotation (41) s'étend de l'extérieur dans la cavité (11)
et/ou **en ce qu'**il est prévu un entraînement d'actionnement (47) par lequel l'élément de rotation (41) peut être entraîné.

5. Dispositif de récipient (1) selon l'une quelconque des revendications précédentes, **caractérisé en ce qu'**
un engrenage (43) est prévu entre l'entraînement d'actionnement (47) et l'élément de rotation (41)
et/ou **en ce que** le compartiment à clé (10) est réalisé de telle sorte que le transmetteur ID (2) peut être logé par complémentarité de forme dans la cavité (11).

6. Insert (60) pour le stockage d'un transmetteur ID (2) dans une cavité (11) d'un dispositif de récipient (1), en particulier d'un dispositif de récipient (1) selon l'une des revendications précédentes, présentant
un corps de réception (61) qui forme un logement de clé (62) dans lequel le transmetteur ID (2) peut être conservé,
dans lequel le corps de réception (61) peut être disposé dans la cavité (11),
**caractérisé en ce que**
le corps de réception (61) présente au moins un moyen d'actionnement (63) qui, lorsque le corps de réception (61) est disposé dans la cavité (11), peut être amené en liaison active avec un mécanisme d'actionnement (40) du dispositif de récipient (1), de sorte que, lors d'une activation du mécanisme d'actionnement (40), une force d'actionnement (F) peut être exercée par le moyen d'actionnement (63) sur un premier élément de commande (2.1) du transmetteur ID (2).

7. Insert (60) selon la revendication 6,
**caractérisé en ce que**
le moyen d'actionnement (63) et le logement de clé (62) sont réalisés d'un seul tenant ou en ce que le moyen d'actionnement (63) et le logement de clé (62) sont réalisés au moins en deux parties
et/ou **en ce que** le moyen d'actionnement (63) est conçu de telle sorte que la force d'actionnement (F) peut être exercée de manière linéaire ou essentiellement linéaire sur le premier élément de commande (2.1).

8. Insert (60) selon l'une des revendications précédentes,
**caractérisé en ce que**
le logement de clé (62) présente au moins une aide à l'insertion (64) qui assure une orientation du transmetteur ID (2) dans au maximum deux positions, de préférence dans une seule position, dans le logement de clé (62)
et/ou **en ce que** le transmetteur ID (2) peut être inséré dans le logement de clé (62) par un premier côté (61.1) du corps de réception (61) et la force d'actionnement (F) peut être exercée par un deuxième côté (61.2) du corps de réception (61) sur le moyen d'actionnement (63) et/ou le premier élément de commande (2.1) et/ou **en ce que** le corps de réception (61) présente sur le premier côté (61.1) un élément de sécurité (67) par lequel le transmetteur ID (2) peut être fixé dans le logement de clé (62), en particulier l'élément de sécurité (67) présentant une fermeture à encliquetage (67.1).

9. Insert (60) selon l'une des revendications précédentes,
**caractérisé en ce que**
l'insert (60) présente au moins un chemin d'entrée (65) par lequel un premier corps de commande (44.1) du mécanisme d'actionnement (40) et l'insert (60) peuvent être alignés l'un par rapport à l'autre, en particulier le chemin d'entrée (65) étant réalisé en forme d'entonnoir
et/ou **en ce que** le moyen d'actionnement (63) présente un élément de rail (66) qui peut être amené en liaison active par complémentarité de forme avec le mécanisme d'actionnement (40) du dispositif de récipient (1), en particulier le premier corps de commande (44.1).

10. Système de récipient (6), présentant un dispositif de récipient (1) selon l'une des revendications 1 à 5 ainsi qu'un insert (60) selon l'une des revendications 6 à 9.

11. Procédé (200) d'actionnement d'un transmetteur ID (2) pour un véhicule (3), le transmetteur ID (2) étant, pendant ce temps, conservé au moins temporairement dans un dispositif de récipient (1), notamment selon l'une des revendications 1 à 5,
comprenant les étapes suivantes :
- Entraîner (203) un mécanisme d'actionnement (40) du dispositif de récipient (1),
- Actionnement (204) d'un premier élément de commande (2.1) du transmetteur ID (2) à la suite de l'entraînement (203) du mécanisme d'actionnement (40), en particulier un déclenchement d'un signal de communication sans fil du transmetteur ID (2) ayant lieu,
le mécanisme d'actionnement (40) présentant un élément de rotation (41) qui est logé de manière à pouvoir tourner, l'actionnement du premier élément de commande (2.1) pouvant être exécuté par une rotation de l'élément de rotation (41),
au moins un premier corps de commande (44.1) étant disposé sur l'élément de rotation (41),
au moins un deuxième corps de commande (44.2) étant prévu, le premier élément de commande (2.1) du transmetteur ID (2) étant actionné par le premier corps de commande (44.1) lorsque l'élément de rotation (41) tourne dans un premier sens de rotation (41.1) et un deuxième élément de commande (2.2) du transmetteur ID (2) étant actionné par le deuxième corps de commande (44.2) lorsque l'élément de rotation (41) tourne dans un deuxième sens de rotation (41.2).

12. Procédé (200) selon la revendication 11,
**caractérisé en ce que**
l'entraînement (203) du mécanisme d'actionnement (40) comprend une rotation (203.1) de l'élément de rotation (41) du mécanisme d'actionnement (40) dans le premier sens de rotation (41.1)
et/ou **en ce que** l'élément de rotation (41) est entraîné par un engrenage (43).

13. Procédé (200) selon l'une des revendications précédentes,
**caractérisé en ce que**
la rotation (203.1) de l'élément de rotation (41) provoque une rotation du corps de commande (44.1) et que l'actionnement (204) du premier élément de commande (2.1) comprend les étapes suivantes :
- Actionner (204.1) un premier moyen d'actionnement (63) en faisant agir le premier corps de commande (44.1) sur le premier moyen d'actionnement (63),
- Actionner (204.2) le premier élément de commande (2.1), **en ce que** le premier moyen d'actionnement (63) agit sur le premier moyen d'actionnement (2.1)
et/ou **en ce qu'**il est prévu en outre les étapes suivantes :
- la levée d'un blindage contre une communication de données sans fil du transmetteur ID (2) avec le véhicule (3) par ouverture (202) du dispositif de récipient (1), et/ou
- fermeture (205) du dispositif de récipient (1).

14. Procédé (200) selon l'une des revendications précédentes,
**caractérisé en ce que**
les étapes suivantes sont exécutées pour la conservation du transmetteur ID :
- L'insertion (201.1) du transmetteur ID (2) dans un insert (60), en particulier de sorte que le transmetteur ID (2) soit fixé par complémentarité de forme dans un logement de clé (62) de l'insert (60),
- L'introduction (201.2), de préférence l'insertion, de l'insert (60) dans une cavité (11) du dispositif de récipient (1)
et/ou **en ce que** l'insertion (201.1) du transmetteur ID (2) dans l'insert (60) comprend une fermeture du logement de clé (62) au moyen d'un élément de sécurité (67).

15. Procédé (200) selon l'une des revendications précédentes,
**caractérisé en ce que**
lors de l'introduction (202) de l'insert (60) dans la cavité (11), au moins le premier corps de commande (44.1) est positionné automatiquement le long de l'élément de rotation (41) par rapport au premier élément de commande (2.1).
